(19) **Europäisches Patentamt**
**European Patent Office**
**Office européen des brevets**

(11) **EP 2 487 503 B1**

(12) **EUROPEAN PATENT SPECIFICATION**

(45) Date of publication and mention
of the grant of the patent:
**02.10.2013 Bulletin 2013/40**

(51) Int Cl.:
*G01S 5/02* (2010.01)    *G01S 5/06* (2006.01)
*G01S 5/10* (2006.01)

(21) Application number: **11154226.2**

(22) Date of filing: **11.02.2011**

(54) **Apparatus and method for localization**

Vorrichtung und Verfahren zur Lokalisierung

Appareil et procédé de localisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.08.2012 Bulletin 2012/33**

(73) Proprietor: **Friedrich-Alexander-Universität
Erlangen-Nürnberg
91054 Erlangen (DE)**

(72) Inventor: **Götz, Alexander
91052, Erlangen (DE)**

(74) Representative: **Maiwald Patentanwalts GmbH
Elisenhof
Elisenstrasse 3
80335 München (DE)**

(56) References cited:
**WO-A2-2008/008685     GB-A- 2 383 708
US-A- 5 596 330     US-A1- 2003 174 086
US-A1- 2010 279 707     US-B1- 6 433 740**

## Description

Technical field of the invention

The present invention relates to the technical field of mobile communication. In particular, the present invention relates to an apparatus for localizing a target device, an evaluation apparatus, a system for localizing and a method for localizing a target device.

Background of the invention

Time of flight based methods for localization are widely used to determines the position of mobile phones. In particular, the time difference of arrival (TDOA) method, which evaluates time differences of signal arrival at multiple base stations, has become a standard approach for mobile phone localization.

These methods rely on the determination of time differences. Based on these measurements, a multilateration technique may be applied in order to calculate the position of the mobile phone.

For determining the time difference values, different approaches have been implemented. These methods include model-based approaches, incoherent integration or successive cancellation approaches. All these methods are usually applied to signals which carry the actual information.

An alternative approach for mobile phone localization is the time of arrival (TOA) method which uses the timing advance (TA) value for determining the distance between a mobile device and a base station.

Moreover, field strength or field intensity measurements can be employed to determine the distance between a base station and a mobile device. These methods are based on measuring the field strength of a radio wave at the locations of a plurality of base stations and are denoted as received signal strength (RSS) methods.

Furthermore, angle based methods are known for determining the position of a mobile device, in particular to determine a heading or bearing of a mobile device. Angle based methods can be denoted as angle of arrival (AOA) methods. For determining the position of the mobile device the triangulation method can be used.

Moreover, the cell identification of a base station in a mobile network can be used for determining the position of a mobile device. This method is commonly denoted as Cell- ID method.

The document DE 10 2007 043 649 A1 relates to a method for localizing unsynchronized radio devices using at least two senders, a hopping scheme and a time difference of arrival (TDOA) method.

The document "Multi-channel distance measurement with IEEE 802.15.4 (ZigBee) devices", from Markus Pichler et al., IEEE Journal of Selected Topics in Signal Processing, Vol. 3, No. 5, October 2009, shows a particular frequency hopping and signal processing scheme by which most transmitter and receiver frequency errors can be eliminated in signal processing using two transmitters and two receivers for determining a one-dimensional position.

The document "Precise distance measurement with IEEE 802.15.4 (ZigBee) devices", from Stephan Schwarzer et al., IEEE Radio and Wireless Symposium, January 2008 discloses a distance measurement setup using the TDOA principle for locating one of four transponders on a straight line, if the position of one transponder is unknown.

The document "Positioning with moving IEEE 802.15.4 (ZigBee) transponders", from M. Pichler et al., IEEE MTT-S International Microwave Workshop on Wireless Sensing, Local Positioning and RFID, September 2009 describes a positioning scheme based on a TDOA measurement with a moving transponder and stationary reference transponders.

The document "Digital cellular telecommunications system (Phase 2+); Location Services (LCS); Functional description; Stage 2"; 3GPP TS 03.71 version 8.9.0 Release 1999; ETSI TS 101 724 V8.9.0 (2004-06) describes using of access bursts for detecting the TOA and a hopping request procedure for mobile phones.

The document IEEE 802.15.1, "IEEE Standard for Information technology-Telecommunications and information exchange between systems-Local and metropolitan area networks-Specific requirements; Part 15.1: Wireless medium access control (MAC) and physical layer (PHY) specifications for wireless personal area networks (WPAN s )", June 14, 2005 describes methods for communicating devices in a personal area network (PAN).

The document IEEE 802.15.4a, "IEEE Standard for Information technology- Telecommunications and information exchange between systems- Local and metropolitan area networks- Specific requirements; Part 15.4: Wireless Medium Access Control (MAC) and Physical Layer (PHY) Specifications for Low- Rate Wireless Personal Area Networks (WPANs) Amendment 1", August 28, 2007 defines the protocol and compatible interconnection for data communication devices using low- data- rate, low- power, and low- complexity short- range radio frequency (RF) transmissions in a wireless personal area network (WPAN) .

The document WO 2008/008685 A2 describes a method for determining location information of a mobile station using U-TDOA, wherein a first timing adjustment is determined from receipt of the ranging frame from the mobile station within a granted uplink time-slot and a second timing adjustment is received from a non-serving base station wherein the second timing adjustment is determined based on receipt of a ranging frame from the mobile station.

The document GB 2 383 708 A relates to position determination and to monitoring positions of players, a ball and officials on a football pitch using unsynchronised, spread spectrum, frequency hopping transmitters attached to each player and operating intermittently on common frequencies.

The document US 2010/0279707 A1 relates to techniques for determining TOAs of signals in a UE wherein the UE correlate a received signal with a locally generated sample sequence.

The document US 6 433 740 B1 describes a method and apparatus for determining the location of a mobile unit using a synchronised signal that is compared to a signal tone transmitted by the mobile unit in order to produce a phase offset.

Summary of the invention

For determining the position of a device there may exist a need to create a more accurate principle for localizing the device.

According to an aspect of the present invention an apparatus for localizing a target device, an evaluation apparatus, a system for localizing and a method for localizing a target device may be provided.

Features of one aspect of the present invention are provided in the independent claims. Features of further exemplary embodiments of the present invention are provided in the dependent claims.

According to an aspect of the present invention, an apparatus for localizing a target device may comprise a receiving device with an output device and a triggering device for receiving a synchronization signal and for providing a trigger signal to the receiving device. The receiving device may be adapted to start receiving a signal from the target device upon receiving the trigger signal from the triggering device and to stop receiving the signal from the target device after expiration of a receiving time interval, for example after expiration of a time window. In another exemplary embodiment, stopping the receiving of the signal can also be achieved by providing a second trigger signal from the triggering device to the receiving device after the receiving time interval.

The receiving device may be further adapted for determining the duration of the receiving time interval from a timing scheme of the target device. In an example, the timing scheme of the target device may be derived from a time division multiplex access (TDMA) scheme comprising a chronological order of TDMA frames and in particular the timing scheme may be derived from a plurality of slots or bursts of a TDMA frame. The bursts may define a grid for the timing, a raster for the timing or a time pattern for the timing.

The time interval and in particular the duration of the receiving time interval may be determined or derived from the timing scheme such that the signal that is received during the time window comprises at least two sub-signals or two bursts which have a different carrier frequency. The duration of the time window may correspond to the duration of at least two successive sub-signals.

The receiving device may be further adapted to identify the target device from which the at least two sub-signals originate. By identifying the target device or by isolating the target device, the receiving device may be able to verify that the at least two sub-signals originate from the same target device or from the same source in order to substantially only evaluate a receiving signal from the same target device.

The triggering device may be adapted to provide the trigger signal with regard to a first reference of the reference determined by the synchronization signal. The first reference may be a reference time on a time scale in order to define a predefined reference time. This first reference may allow a synchronization with a further apparatus for localization of the target device. Thus, a global synchronization with other apparati for localization may be achived. In an example a synchronization apparatus may generate a clock signal comprising clock pulses at predefined points in time. A selection of one of these clock pulses may be used as the reference time. By way of synchronization at least two separate apparati for localizing may operate synchronously. In an example the target device however, may not operate synchronously with respect to the apparati for localizing that target device. In another example the target device may operate synchronously with respect to the apparati for localizing that target device.

The receiving device may be further adapted to provide the received signal on the output device. The received signal may be a signal received by the receiving device during the time window. For receiving the substantially complete bandwidth of the at least two sub-signals or in order to receive an accumulation of substantially the at least two sub-signals, the bandwidth of the receiving device may be substantially equal to or broader than the accumulation of the bandwidths of the at least two sub-signals.

In order to increase the accuracy of the determined position of a target device, a plurality of sub-signals having different frequencies can be used. The duration of the receiving time interval may comprise the duration of a plurality of bursts or sub-signals originating from the same target device. Thus, a signal having the accumulated bandwidth of the at least two sub-signals or of the plurality of sub-signals can be received or recorded by the receiving device. In an example, the time window or the duration of the receiving time interval may be adjustable by an input device.

In this text the term wideband or broadband may substantially be used to describe a frequency band that comprises a bandwidth that is at least the accumulated bandwidth of at least two sub-bands. Thus, the accumulated bandwidth may be the pooled amount of the bandwidths of the at least two sub-bands or the set union of the bandwidths of the at least two sub-bands. The accumulated bandwidth can equivalently be identified as the whole bandwidth that is covered or spanned by the at least two sub-signals, including empty frequencies or frequency gaps between the frequencies of the at least two sub-signals. The at least two sub-bands belong to at least two sub-signals that are available at different points of time according to the TDMA scheme or that are available at substantially the same points of time in non overlapping sub-bands. The wideband bandwidth is broader than each individual sub-band bandwidth of each sub-signal. In other words, a wideband signal may be generated by concatenating at least two sub-signals, wherein each sub-band of the at least two sub-signals comprises at least one frequency that is not included in the other sub-band. The sub-signal may also be denoted as narrowband signal. The concatenation of the sub-signals may be achieved by windowing a received signal, e.g. with a time window.

According to another aspect of the present invention, an evaluation apparatus is provided, which may comprise a first input device for receiving a received signal of a target device as a first received signal and a second input device for receiving a further received signal of the target device. The evaluation apparatus may be adapted to determine that the received signal and the further received signal correspond to each other, e.g. the evaluation device determines that the signals have been generated during corresponding synchronous time windows received in corresponding receiving devices. The evaluation apparatus may be adapted to analyze a time difference between the received signal and the further received signal by using at least one analyzing method selected from the group of analyzing methods consisting of a wideband correlation method and a burst phase analyzing method. In an example, more than at least two receiving devices may provide their received signals to the evaluation apparatus and thus the evaluation apparatus may comprise a plurality of input devices and may be adapted to differentiate the different received signals or receiving signals. The evaluation apparatus may be able to isolate the target device in order to ensure that the received signals originate from the same target device. The received signals of the target device and the further received signal of the target device may differ in time of flight and/or phase angle. The time of flight or propagation time corresponds to the travelling time for a signal needed to cover the distance between the target device and a receiving device. The received signal and the further received signal may comprise the bandwidth of at least two sub-signals.

The evaluation apparatus may be operated independently and/or asynchronously with regard to the receiving devices. Corresponding signals received from different receiving devices may be differentiated in the evaluation device by evaluating an identifier such as an internet protocol (IP) address of the receiving device or of the apparatus for localization, included in the received data or in the received signal and may be added by the receiving device. The received signal, the further received signal and any other of the plurality of further received signals can be distributed via a fixed line such as a local area network (LAN) or via a wireless network such as a wireless LAN (WLAN).

According to a further aspect of the present invention, a system for localizing a target device may be provided, which comprises at least two apparati for localization of a target device according to the invention. The at least two apparati or the plurality of apparati may be positioned at different positions. The system may be adapted to localize the target device by using a time difference of arrival method (TDOA) and/or a multilateration method. The number of apparati used in the system may be the at least by one increased number of dimensions within which dimensions the target device is intended to be localized. For example in a 2D (two dimensional) situation at least three apparati may be used.

According to another aspect of the present invention, a method for localizing a target device comprises receiving a synchronization signal, e.g. in a triggering device. The synchronization signal may originate from an apparatus for localization. The synchronization signal can also be received and/or derived from a global navigation satellite system (GNSS) such as a global positioning system (GPS) or Galileo system, from a synchronization network, e.g. a wired synchronization network or a wireless synchronization network. The method may further comprise determining a duration of a receiving time interval from a timing scheme of the target device such that the received signal comprises at least two sub-signals having a different frequency.

The method further comprises providing the trigger signal with regard to a first reference, e.g. providing the trigger signal to a receiving device, wherein this first reference is determined by the synchronization signal. This first reference in an example may be a clock pulse derived from the synchronization signal and may be a global reference in time and/or frequency common to all localization apparati of a plurality of localization apparati of a system for localization. The method may further comprise starting the reception of the signal from the target device upon receiving the trigger signal, e.g. upon receiving the trigger signal from the triggering device, and stopping the reception of the signal from the target device after expiration of the receiving time interval. The method further comprises providing the received signal, e.g. on an output device or output interface of the receiving device.

The method may further comprise identifying the target device or isolating the target device from which the at least two sub-signals are originating. The target device may be the source of the received signals. By identifying the target device the method and/or the apparatus for localizing may be able to verify that the received at least two sub-signals originate from the same or identical target device. This identification of the target device may allow to analyze substantially only received signals which originate from the same target device.

According to another aspect of the present invention, a computer-readable storage medium may be provided which comprises a program code, that, when carried out on a processor, carries out the method of localizing a target device.

According to another aspect, a program element may be provided, which, when carried out on a processor, may carry out the method for localizing a target device.

It may be seen as an idea of the present invention to receive a plurality of signals, sub-signals or bursts, which originate from the same target device or the same source. The sub-signals differ in the covered frequency bands and/or in the carrier frequencies, which may be used to send the sub-signals and thus the received signals comprise at least two sub-signals covering different frequencies. The frequency may be varied in accordance to a hopping scheme or frequency hopping scheme, which may determine a predefined frequency variation for a timeslot allocated for the target device, i.e. the hopping scheme may determine the frequency allocation according to a timing scheme. The received signal may be received using a wideband frontend or a narrowband frontend and the received signal, which may be identified as originating from the same target device, can be evaluated by an evaluation device based on the fact that at least two signals with varying carrier frequencies from the same source have been received or recorded at different positions during substantially identical time windows. The synchronization of the apparati for localization allows the evaluation of a phase or a wideband cross-correlation of two signals received from the same target device. The target device may be the device that is to be localized. In an example, the target device can be a mobile device. Referred to the global first reference the time windows start and stop substantially at the same time in different apparati of localization, thus all localization apparati may work substantially synchronous with regard to the time. Thus, the different apparati of localization may receive different receiving signals, depending on the distance and time of flight between the target device and the apparatus for localization. The frequency and phase of local oscillators, e.g. PLLs, on different apparati of localization may be synchronized in order to ensure that the local oscillators of different apparati of localization work synchronously, in particular with regard to the frequency and to the phase. Furthermore, analog digital converters (ADCs) on different apparati for localization use the same frequency and phase and thus are synchronized with regard to the frequency and to the phase. In particular the phase may be referred to the first reference. The time window, local oscillator and/or ADC within the same localization apparatus may work synchronously with regard to each other. But in another example the time window, local oscillator and/or ADC within the same device work asynchronously with regard to each other. For example the PLL and ADC frequencies and phases of the same apparatus for localization may be derived from the same or different references common in all different apparati for localization. In other words, the PLL and ADC of the same apparatus for localization may use different frequencies and/or phases compared to each other.

In addition to synchronizing receiving devices by using the substantially same time window, also the local oscillators or PLLs and the analog digital converters (ADCs) may be supplied with synchronous clock signals. In an example a synchronous clock signal may be provided to the PLL and/or to the ADC that is derived from the synchronization signal. The synchronous clock signals may be periodic signals, e.g. sinus signals or square wave signals, and the clock signals can be related to the first reference, in order to have a defined global reference point in time. Thus the receiving device, the ADC and the PLL of different apparati for localization operate synchronously, i.e. they base on the same synchronization signal. By way of synchronization a plurality of receiving devices and in particular a plurality of apparati for localization may provide receiving signals based on substantially the same time basis or referred to the same reference. In an example, the trigger signal, the synchronization signal and/or synchronous clock signals may be distributed via separate distribution networks instead of deriving the signals from the same synchronization signal.

According to another aspect of the invention, the time windows in different apparati of localization may start at different predetermined times relative to the first reference. Furthermore, the phases of the local oscillators (PLLs) and analog digital converters (ADCs) in different apparati of localization may be shifted by a predetermined phase value relative to the first reference. A compensation of these shifts and/or differences of the predetermined times may be accomplished in further processing steps.

According to an exemplary embodiment of the present invention, the apparatus for localization may further comprise a hopping request device which may be adapted for identifying the timing scheme of the target device. The timing scheme may be identified by at least one method selected from the group of methods consisting of providing a predetermined hopping scheme, providing a linear hopping scheme, providing a pseudo-random hopping scheme to the target device, providing a cyclic hopping scheme to the target device, detecting a communication channel of the target device, establishing a communication channel with the target device, deriving a hopping scheme from a database and initiating a modified handover of the target device. The predetermined hopping scheme, cyclic hopping scheme, linear hopping scheme and/or the pseudo-random hopping scheme can be used either during the modified handover and/or during the standard communication between the target device and the base station. During the standard communication a communication channel may be used. In an example at least one of these identification methods for the timing scheme may trigger the transmission of the at least two sub-signals from the target device. Thus, identifying the timing scheme may comprise initiating the transmission of the at least two sub-signals from the target device e.g. by an initiation method such as providing a predetermined hopping scheme, providing a linear hopping scheme, providing a pseudo-random hopping scheme, providing a cyclic hopping scheme to the target device and/or initiating a modified handover of the target device.

A hopping scheme may comprise a list of frequencies which can be used by a target device for sending out information at a predefined timing on varying frequencies. The timing in an example may be a list of timeslots or a predetermined timeslot number following a TDMA scheme or a TDMA frame structure and thus may define a timing scheme. The hopping scheme, in particular the frequencies, which are included in the hopping scheme, may determine channels of a predefined channel bandwidth and/or the frequency of the channels. These channels may be used by the target device for sending a signal at a predefined timeslot or timing. Therefore, a band having a bandwidth, such as an uplink band or a downlink band, may be divided into a raster or grid of different frequencies or of different channels. A band may be used for communication of a target device with a base station and may be defined by a regulatory authority. Furthermore, the timing may comprise a time grid, timeslots or time channels which may be periodically repeated. For communicating, a target device or a mobile device may use a combination of a time division multiple access (TDMA) scheme and a frequency division multiplex access (FDMA) scheme in order to identify a communication channel or a burst. A timing or a combination of a TDMA and FDMA scheme may be a rule agreed between a sender and receiver, e.g. a mobile device and a base station, in order to allow identifying a channel that is used for a communication between the mobile device and the base station.

By providing a hopping scheme or by initiating a modified handover, a target device may be instructed to use a predefined frequency for transmitting a predefined sub-signal or burst. If both, the receiving device and the target device, use the same hopping scheme the receiving device may be able to recognize that information, which is received by the receiving device, originates from a single source. The hopping scheme used by the sending side thus can be seen as a finger print of the source. If the receiving side initiated the transmission according to a hopping scheme and afterwards recognizes that a source uses this hopping scheme provided by the receiving side the receiving side can identify the source.

An apparatus for localization may ensure that the target device uses at least two different frequencies and thus uses a broad portion of the bandwidth that is supported by the receiving device. In particular, the receiving device may comprise a frontend that defines the receiving bandwidth. The receiving device can comprise a wideband frontend and/or a narrowband frontend. The bandwidth of the wideband frontend may comprise at least two times the bandwidth of one sub-signal and therefore may be able to receive the complete sequence of signals transmitted by the target device substantially without adapting a frequency of a local oscillator during the reception. The complete signal may be a concatenated signal of sub-signals over a predefined time, e.g. over the duration of the time window.

The hopping request device may allow to set a second reference in order to define a common reference in time with the target device. This second reference may be a reference in time to define a timing according to which the receiving frequencies for a local oscillator or a phase locked loop (PLL) of a narrowband frontend should be adapted in order to receive the signals according to the provided hopping scheme. Thus, using a common hopping scheme between the target device and the receiving device may be seen as a synchronization between an apparatus for localization and the target device. This synchronization can be different from a synchronization between a plurality of apparati for localization. In other words, the second reference may also be a global reference or system wide reference for all localization apparati of a system for localization. The second reference and the first reference may be different references. The hopping request device may be adapted to send and/or to receive the second reference to/from further hopping request devices of further apparati for localization in order to synchronize the time for the change of local oscillator frequencies of the different apparati for localization. This second reference may determine the global points in time when the PLL of a narrowband frontend adjusts its frequency. Since empty timeslots between the sub-signals may be available, the requirements for the grade of synchronization of adapting the frequency of the PLL to the frequency of the sub-signal may be lower than the requirements for the grade of the synchronization of the time window, the ADC frequency and ADC phase, and the PLL frequency and PLL phase. The second reference may ensure that the PLLs of different apparati for localization in a system for localization adjust the frequency at substantially the same time, but not later than the target device starts sending with the corresponding frequency. However, an increase in the accuracy of the synchronization of the different ADCs (frequency and phase), PLLs (frequency and phase), time window (trigger time) and frequency adjusting time (trigger time) may increase the accuracy of the localization. The ADCs may use a global ADC frequency and a global ADC phase, the PLLs may use a global PLL frequency and a global PLL phase, the time windows may use a global trigger time and the frequency adjusting time may use a global frequency adjusting time or a global frequency adjusting frequency. Global values may be used for corresponding components in a system in order to synchronize these components.

In one example, the receiving device may operate independently from a base station or GSM base station. The receiving device or a plurality of receiving devices use a synchronization signal and passively receive the signals of the target device. The base station may maintain a connection to the target device and may control the hopping request device in order to initiate a transmission according to a hopping scheme of the target device and may use the same hopping scheme as the target device. Thus, the frequencies for the hopping scheme may be derived from the base station. In order to adapt the narrowband frontend to the actual sub-signal frequency the receiving device may be supplied with the information of the used frequencies and the corresponding timing, e.g. the timeslots. In an example, the target device may substantially only have established a connection to a single base station and thus, the hopping may be derived from this single base station. The receiving device may be adapted to find the actual base station and receive the hopping scheme from that base station.

The hopping scheme may be a linearly increasing hopping scheme, a cyclic hopping scheme or a pseudo-random hopping scheme. A base station according to the GSM standard may provide a list of available frequencies, whereas a pseudo-random hopping scheme may use an algorithm for selecting the frequencies. A cyclic hopping scheme may use one frequency after the other. A linear hopping scheme may be characterized by equal differences between consecutive frequencies.

According to another exemplary embodiment of the present invention, the receiving device further comprises a frequency adjusting device, e.g. a PLL, wherein a bandwidth of the receiving device may correspond to a bandwidth of at least one of the at least two sub-signals. In an example, every sub-signal or burst comprises substantially the same bandwidth. Thus, a receiver or receiving device may be provided, which substantially has this burst bandwidth. A channel may be analyzed by down-mixing a corresponding frequency of the channel into the baseband. Thus, when following the frequency hopping scheme with a local oscillator, a sequence of channels of the same target device can be analyzed and in particular a phase of corresponding signals can be analyzed.

The frequency adjusting device may further be adapted to adjust the receive frequency of the receiving device, in particular the receive frequency of the narrowband frontend of a receiving device in accordance with the frequency corresponding to each of the at least two sub-signals at a corresponding timing. The receiving frequency and the corresponding timing of each of the at least two sub-signals may be derived from the hopping scheme. In an example the receive frequency may be derived from a hopping scheme that was provided to the target device. In another example, the actually used frequency hopping scheme of the target device may be detected by detecting the communication channel that is actually used by a communication between the target device and a base station and the receiving frequency may be adapted to this frequency hopping scheme used by the target device. This hopping scheme can be derived from the base station. By this way of detecting a communication channel the target device can be identified without providing the hopping scheme to the target device immediately before the detection. The hopping scheme may be provided in order to allow the communication between the target device and the base station, e.g. during a communication setup. However, in that example the provision or re-provision of the hopping scheme may not be necessary as part of the localization method. In another example the receiving device can receive the hopping scheme or the second reference from a further localization apparatus via a data communication network.

In a further example the frequency adjusting device may be further adapted to adjust the receive frequency with regard to a second reference determined by a timing that is determined by identifying the timing scheme of the target device or by initiating the transmission of the at least two sub-signals and/or by detecting the communication channel. The frequency adjusting device is adapted to select the receiving frequency according to a hopping scheme or a frequency hopping scheme used by the target device. Adjusting the receive frequency or changing the frequency, e.g. by reprogramming a PLL, however, may be asynchronous to the synchronization signal. In other words, a first reference may be derived from the synchronization signal and a second reference may be determined by identifying the timing scheme of the target device. The first reference may be substantially independent from the second reference. The first reference may be a reference for starting a time window and/or for referring global frequencies and phases to, the second reference may be a reference for adjusting a frequency.

According to another exemplary embodiment of the present invention, the receiving device may be adapted to use at least one identification method selected from a group of identification methods for identifying the target device. The group of identification methods may consist of identifying an identification of the target device, initiating a modified handover, providing a hopping scheme to the target device and eliminating a signal of a device different from the target device. The modified handover or fictive handover may comprise the provision of a hopping scheme to the target device.

By identifying an identification of the target device an address or an identifier such as an international mobile subscriber identifier (IMSI) may allow to ensure that the received sub-signals originate from the same source. By initiating a modified handover, a hopping scheme of the source and the receiving device may be synchronized in order to ensure that the received signals at corresponding frequencies and at predefined timings of the TDMA scheme originate from the same source. Providing a hopping scheme to the target device may also ensure that the receiving device, in particular a PLL frequency adjusting time and/or a PLL frequency of a narrowband frontend, and the hopping scheme of the source are synchronized.

In order to ensure that substantially only the signal of a single source is received, the apparatus for localization of the target device may comprise an interference cancellation device. The interference cancellation device may be adapted for eliminating signals of substantially all other devices that differ from the target device, which has to be localized. Thus, interfering signals generated by other devices can be eliminated and the receiver or the receiving device can ensure that the received signals substantially only originate from a single source. In another example the interference cancellation device can comprise a signal processing device that is adapted to eliminate signals other than the signals from the target device. Such a signal processing device may be used in combination with a wideband frontend. If a narrowband frontend is used the signals of other sources than the target device may substantially be eliminated by synchronizing the frontend to the hopping scheme of the target device and adjusting the receiving frequencies accordingly.

In another example, the at least two sub-signals correspond to at least two bursts, wherein each burst may be characterized by a frequency of a frequency division multiple access scheme (FDMA) and/or a timing of a time division multiple access scheme (TDMA). The frequencies of the bursts or the sequence of frequencies that have to be used according to the timing are characterized by the hopping scheme.

According to another exemplary embodiment of the present invention, the receiving device may be adapted to pre-process the received signal by using at least one pre-processing method selected from the group of pre-processing methods consisting of a Fourier transform method, a Fourier analysis method, forming a cross-correlation with a training sequence, a temporal isolation method and a spectral isolation method.

Pre- processing of the received signal may allow to reduce the quantity of information that has to be transmitted to an evaluation device. The pre- processing may allow compressing the information gathered from the receiving device. Forming a cross- correlation with a training sequence may comprise calculating a complex argument of the correlation product for obtaining a phase value. A maximum of the absolute values of the complex correlation product of the training sequence and the received signal is determined and the corresponding phase value of this maximum is calculated.

According to another exemplary embodiment of the present invention, the apparatus for localization may further comprise an evaluation device. The evaluation device may comprise a first input device, which can be connected to the output device of the receiving device for receiving the received signal from the target device via the receiving device, and a second input device for receiving a further received signal from the same target device via a further apparatus for localizing. The evaluation device may be adapted to determine that the received signal and the further received signal correspond to each other. The evaluation device is further adapted to analyze a time difference between the received signal and the further received signal. In a further example the evaluation apparatus may be adapted to analyze the received signals with regard to a first reference determined by a synchronization signal.

The evaluation device may receive received signals originating from the same target device via at least two different receiving devices, wherein the receiving devices operate synchronously. By using synchronized receiving devices, a phase information in the receiving signal can be analyzed by the evaluation device. In one example, the evaluation device may be adapted to verify that the received signals originate from the same source. In a further example the evaluation device is adapted to initiate a memory download from a receiving device or to compare time stamps that are allocated with the received signal and the further received signal in order to verify that the received signals correspond to each other. In yet another example the evaluation device may be adapted to identify the target device. In that case, the receiving device may provide the received wideband signal and the evaluation device or evaluation apparatus separates and/or eliminates the signal sources.

According to another exemplary embodiment of the present invention, at least one of the receiving device, the triggering device, the evaluation device, the frequency adjusting device, the interference cancellation device and/or the hopping-request device is an external device, for example an external server. An external evaluation device may correspond to an evaluation apparatus. The external devices may be included in a base station.

According to yet another exemplary embodiment of the present invention, the evaluation device may be adapted to analyze the time difference between the received signal and the further received signal by using at least one analyzing method selected from the group of analyzing methods consisting of a wideband correlation method and a burst phase analyzing method. The method that can be used may depend on a frontend that is used for receiving the signals.

According to another exemplary embodiment of the present invention, the apparatus for localization of a target device may be further adapted to execute the wideband correlation method. In particular, the evaluation device may be adapted in order to execute the wideband correlation method with the received signal and the further received signal over the duration of the receiving time interval, wherein the received signal and the further received signal each comprise at least a bandwidth determined by an accumulation of the bandwidths of the at least two sub-signals.

In other words, the wideband correlation method may correlate the received signals from a wideband frontend over the duration of the receiving time interval. The duration of the receiving time interval may also be named as a receiving window or time window.

According to another exemplary embodiment of the present invention, in order to execute the burst phase analyzing method, the receiving device may be further adapted for providing the at least two sub-signals as a first burst and a second burst from an apparatus for localizing. The evaluation device may be adapted for receiving the first burst and the second burst and the evaluation device may be further adapted for receiving a further first burst and a further second burst from the further apparatus for localization. The first burst may correspond to the further first burst and the second burst may correspond to the further second burst and the evaluation device may be further adapted to analyze the time difference by dividing the quotient of the further second burst and the second burst by the quotient of the further first burst and the first burst. Further quotients of signals and/or a series of values may be calculated during executing the burst phase analyzing method.

For dividing the complex quotients the evaluation device may use complex numbers or I and Q components of a complex signal. I is a real part and Q is an imaginary part of a complex number.

According to yet another exemplary embodiment of the present invention, the analyzing of the time difference comprises at least one method selected from the group of methods consisting of a method of determining a least squares approximation, a least squares fit method, calculating of a complex argument, calculating of a phase angle, a model-based evaluation method, a multi-signal classification method (MUSIC), an estimation of signal parameters via rotational invariance techniques method (ESPRIT), a method of forming a Fourier transform, a method of forming a Fast Fourier Transform (FFT), a method of forming an inverse Fast Fourier Transform (IFFT), a method of forming a Discrete Fourier Transform (DFT) and a method of forming an inverse Discrete Fourier Transform (IDFT).

According to yet another exemplary embodiment of the present invention, the receiving device, the triggering device, the hopping request device, the interference cancellation device, the database, the synchronization device and/or the evaluation device are included in a single housing. For example, the receiving device, the triggering device, the hopping request device, the interference cancellation device and the evaluation device may be included into a base station for a mobile communication network, for example into a GSM (Global System for Mobile Communications) base station. In another example the apparatus for localization may be portable, e.g. for transporting the apparatus for localization in a backpack. As an alternative example the single housing comprises the components in a compact form in order to enable rescue personnel to transport the localization apparatus to the area where it is to be used, e.g. a 19" rack.

By using at least three apparati for localization in a system, a target device may be located in a two-dimensional space (2D) by using at least four apparati for localization a target device in a three-dimensional space (3D) can be localized or a position of the target device can be detected.

It has also to be noted that exemplary embodiments of the present invention and aspects of the invention have been described with reference to different subject-matters. In particular, some embodiments have been described with reference to apparatus type claims whereas other embodiments have been described with reference to method type claims. However, a person skilled in the art will gather from the above and the following description that unless otherwise notified in addition to any combination between features belonging to one type of subject-matter also any combination between features relating to different subject-matters in particular between features of the apparatus type claims and the features of the method type claims may be considered to be disclosed with this application.

These and other aspects of the present invention will become apparent from and elucidated with reference to the embodiments described hereinafter. Exemplary embodiments of the present invention will be described in the following with reference to the following drawings.

Brief description of the drawings

Fig. 1 shows a system for localizing a target device according to an exemplary embodiment of the present invention.

Fig. 2 shows a block diagram of the physical layer of a GSM uplink and downlink frame structure.

Fig. 3 shows a block diagram of an apparatus for localizing a target device according to an exemplary embodiment of the present invention.

Fig. 4 shows a spectrogram of a plurality of received bursts during the duration of a time window according to an exemplary embodiment of the present invention.

Fig. 5 shows a schematic view of a wideband correlation function in an evaluation device according to an exemplary embodiment of the present invention.

Fig. 5a shows an enlarged view of a main peak of a correlation function according to an exemplary embodiment of the present invention.

Fig. 6 shows a spectrogram of a receiving signal using a linear frequency hopping scheme for bursts according to an exemplary embodiment of the present invention.

Fig. 7 shows a spectrogram after concatenating of the bursts of Fig. 6 according to an exemplary embodiment of the present invention.

Fig. 8 shows a spectrogram after stacking the bursts of Fig. 6 according to an exemplary embodiment of the present invention.

Fig. 9 shows a diagram of phase values of different burst quotients according to an exemplary embodiment of the present invention.

Fig. 10 shows a DFT diagram that can be used to determine a time difference of arrival according to an exemplary embodiment of the present invention.

Fig. 11 shows a flow chart of a method for localizing a target device according to an exemplary embodiment of the present invention.

Detailed description

The illustration in the drawings is schematic. In different drawings, similar or identical elements are provided with the same reference numerals.

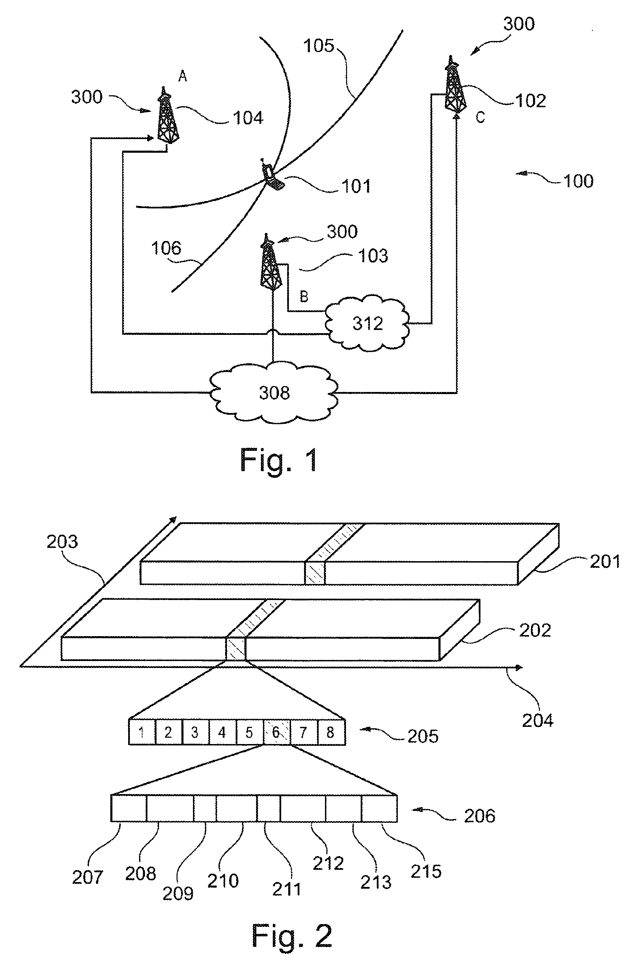

Fig. 1 shows a system 100 for localizing a target device 101, wherein the system for localizing 100 comprises a plurality of apparati for localization. In Fig. 1 the system 100 comprises three apparati for localization 102, 103, 104, 300. The apparati can be collocated with base stations A, B, C that comprise the apparati for localization 102, 103, 104, 300 and in particular a receiving device (not shown in Fig. 1) thereof. The TDOA analysis or the multilateration can be executed in an evaluation device (not shown in Fig. 1) that may be included in at least one of the apparati of localizing 300.

The system 100 can be used for localizing a target device 101, e.g. a mobile device 101, based on a time delay based locating method or based on a propagation time of a signal sent by the target device 101. Examples of target devices 101 are GSM mobile phones, TETRA mobile phones, Digital Enhanced Cordless Telecommunications (DECT) phones, IEEE 802.15.4 (e.g. ZigBee™) devices or IEEE 802.15.1 (Bluetooth™) devices. The system 100 can be used for realizing location-based services, for localizing of missed persons or buried persons. The stations A, B, C and the target device 101 of the system 100 use a frequency hopping scheme for communication. The localization apparati 102, 103, 104, 300 or apparati for localizing 102, 103, 104, 300 can also operate according to the frequency hopping scheme. In another example the apparati 102, 103, 104 can influence the hopping scheme that is used from target device 101. The localization of the target device 101 or localizing the target device 101 bases on a time difference of arrival (TDOA) principle. In this principle receivers or receiving devices of the localization apparati 102, 103, 104, 300 are distributed in an area, for example at the positions of the stations A, B, C, wherein the receivers of the localization apparati 102, 103, 104, 300 are synchronized. The time difference or the time delay between radio signals, which are detected between two receivers, are evaluated. These time difference of arrival values or time delay values can be used for a hyperbolic-intersection method, a multilateration method or another method for determining the position of the signal source 101. Fig. 1 shows in a schematic way a hyperbola 105 which shows all possible time difference of arrival values between the apparati 103, 104 at stations A and station B. The hyperbola 106 shows all TDOA values between the apparati 102, 104 at stations C and station A. The location or position of the target device 101 or the signal emitter 101 lies on the intersection of both hyperbolas 105 and 106. At least one of the apparati 102, 103, 104 or stations A, B, C comprises a hopping request device (not shown in Fig. 1) for initiating or triggering the transmission of predetermined signals in the target device 101. An evaluation device (not shown in Fig. 1) determines the time difference of arrival values between all stations. Evaluating the TDOA values may allow determining the position of the target device 101 or mobile device 101.

The localization apparati 102, 103, 104 can be a carrier equipment or an infrastructure which is provided by rescue staff. The locations of the localization apparati 102, 103, 104 and/or the locations of the stations A, B, C may be known due to a fixed deployment, may be derived by a separate system for wireless local positioning or may be provided by a global navigation satellite system (GNSS). The localization apparati 102, 103, 104 use the uplink time difference of arrival (U-TDOA) principle for localizing the target device 101. In the U-TDOA method the target device 101 transmits a signal, which is received by a plurality of localization apparati 102, 103, 104, in particular by receivers of the localization apparati. At least one of the plurality of localization apparati 102, 103, 104 comprises a device that is adapted to trigger the target device 101 to transmit a signal, e.g. a hopping request device. The base stations A, B, C or the receivers of corresponding localization apparati 102, 103, 104 receive the transmitted signal of the same target device 101 and determine the time difference of arrival or the time delay for the signal. The apparati 102, 103, 104 are synchronous in time and frequency.

Thus, the target device 101 can be localized by localizing the source 101 of the transmitted signal. The precision of the time difference determination is high if the bandwidth of the signal that is to be localized is high or wide or broad. A single GSM burst for example may comprise a bandwidth of 200 kHz. An average value may be determined by using a plurality of bursts which are transmitted by the source 101 at alternating carrier frequencies or varying carrier frequencies. Thus, each burst may cover substantially the same bandwidth, however at different frequencies. In particular, a plurality of bursts of different carrier frequencies can be used for determining the time difference of arrival of a signal sent by the target device 101. Using a plurality of bursts at different carrier frequencies may allow to generate a resulting signal with a higher bandwidth compared to the bandwidth of each single burst. In other words, by varying the carrier frequency of a plurality of bursts and by concatenating the bursts, the bandwidth of each individual burst can be accumulated over a time interval in order to provide an accumulated bandwidth over that time interval, wherein the concatenated signal covers a broader frequency range than each single burst. In E- GSM 900 (an extension of GSM, Global System for Mobile Communications) a bandwidth of substantially 35 MHz may be covered using a frequency hopping scheme in order to vary the frequency over a time interval. Increasing the bandwidth may increase the accuracy of determining the time difference of arrival.

Fig. 2 shows a block diagram of the physical layer of a GSM uplink and downlink frame structure for a better understanding of the present invention. Fig. 2 uses the example of GSM in order to describe how a frequency band can be divided into sub-bands. For example, GSM uses Gaussian Minimum Shift Keying (GMSK). This modulation method uses a phase modulation with a constant envelope or envelope curve. The bandwidth of each signal or sub-signal in GSM covers about 200 kHz. Such a modulated signal comprises a plurality of bursts 206 with limited duration, e.g. 546.5 μs for a normal burst or 324.9 μs for an access burst without considering the guard period 215. A plurality of different types of bursts can be differentiated, such as a normal burst or an access burst. A normal burst is a burst that is used on a traffic channel and on a signalling channel. An access burst is used when a mobile device logs in to a new cell or changes the cell, e.g. when the mobile device executes a handover.

A burst can comprise a predefined sequence 210, e.g. a training sequence, having a known format and content. A burst also comprises the payload data 208, 212 and tail bits 207, 213 at the beginning and the end of a burst and stealing bits 209, 211. At the end of a burst a guard period 215 is used, that forms a guarding time against a successive burst.

A transmission band 201, 202 can be structured into a plurality of channels. Thus, the frequency band, which is used to transfer the communication data may be organized in the form of a grid. This grid can be a grid for the time or timing and/or a grid for the frequency. In other words, the frequency range, which can be used for transmitting data, for example the frequency band for GSM communication can use a mixture of a time division multiplex access technique (TDMA) and a frequency division multiplex access technique (FDMA). In such a combined TDMA/FDMA structure for a mobile device a predetermined timeslot 206 can be allocated within the TDMA frame. The terms timeslot 206 and burst 206 are similarly used since a burst substantially extends during the duration of a time slot 206 allocated to the target device 101. In particular however, a timeslot is filled with a burst such that the burst does not comprise the protective time 215 and therefore, the duration of a burst is shorter than the duration of a timeslot.

The frequency band used in GSM for a downlink direction 201 ranges from 935 to 960 MHz and the uplink frequency band 202 ranges from 890 to 915 MHz. The frequency is shown at the frequency axis 203. The frequency axis 203 is divided into a plurality of narrowband bandwidth ranges of 200 kHz. In GSM the uplink frequency band 202 and the downlink frequency band 201 comprise 124 frequency channels wherein each of the frequency channels has a bandwidth of 200 kHz. The uplink bandwidth and the downlink bandwidth comprise in GSM 25 MHz. For detecting the position of a target device 101 an uplink band 202 is used. E-GSM 900 comprises a frequency band of 35 MHz for the uplink and for the downlink 201. Uplink 202 and downlink 201 each comprise 174 channels in the E-GSM 900 standard. The uplink frequency band for E-GSM 900 ranges from 880.0 MHz to 915.0 MHz and the downlink frequency band from 925.0 MHz to 960.0 MHz. Other frequency ranges can be used, for example in other standards, such as GSM 850, DCS 1800 or PCS 1900.

Fig. 2 also shows the time axis 204. The time axis 204 is divided into portions using a time grid or a TDMA frame structure 205. The TDMA frame 205 comprises a plurality of periodically repeated timeslots 206, e.g. 8 timeslots. Each timeslot, e.g. timeslot 6 of the GSM frame 205, comprises a plurality of bits. In the beginning and the end of a burst 206, 3 tail bits 207, 213 are used in order to define in combination with the guard period 215 a predetermined beginning and ending of a timeslot. The burst 206 further comprises 57 payload data bits 208, 212, two stealing bits 209, 211 and a 26 bit training sequence 210. During a communication a target device may use the same allocated timeslot number 206 of a frame 205 for all bursts 206 that are sent by the target device independently of the frequency or channel it uses. Each channel can have a carrier frequency which either is fixed or which can be changed based on hopping scheme or a frequency hopping scheme from frame to frame 205. A timeslot 206, in particular the sub-signal 206 or the modulated signal 206 of a predefined carrier frequency is named as a burst 206 of limited duration. In particular, a timeslot may comprise a burst 206 and a guard period 215.

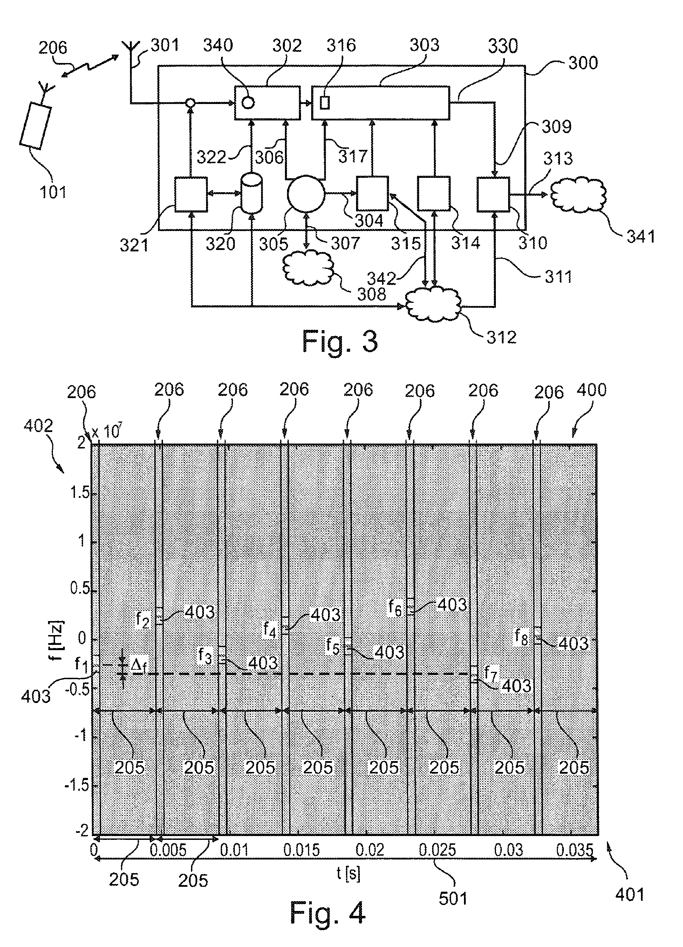

In Fig. 3 the apparatus for localizing a target device 300 is depicted. The apparatus for localization 300 receives via antenna 301 one or a plurality of bursts 206 from the target device 101. The received bursts 206 or sub-signals 206 are received by the frontend 302 of the receiving device 303, which is connected to antenna 301. The frontend 302 can be implemented as a narrowband frontend 302 or as a wideband frontend 302. The frontend is connected to the receiving device 303 of the apparatus for localization 300. The receiving device 303 receives a trigger impulse from the triggering device 315 that derives the trigger impulse from the synchronization signal 304. The triggering device 315 derives the trigger from the synchronization device 305 that can also provide a synchronization signal 306 to the frontend 302, in particular to a PLL 340 of the frontend 302 and to the analogue/digital converter (ADC) 316. The synchronization device 305 receives a synchronization signal 307 from the synchronization network 308. The synchronization network 308 provides a synchronization signal to a plurality of apparati of localization 300. The synchronization signal 307 allows different apparati for localization 300 to operate synchronously. A synchronous operation of different apparati for localization 300 allows evaluation of a phase in a receiving signal 206, in particular a time difference of arrival of corresponding signals 206 between different apparati of localization. The receiving device 303 comprises an output device 330 e.g. an output interface or a link, which connects the receiving device 303 to the input device 309 of the evaluation device 310 or evaluation apparatus 310. In an example the output device 330 of the receiving device corresponds to the input device 309 of the evaluation device 310. In another example the output device 330 is a network interface for connecting the receiving device 303 to the communication network 312. The evaluation device 310 has a further input interface 311, which is connected via a communication network 312 to at least one further apparatus for localization (not shown in Fig.

3). The evaluation device 310 can analyze signals provided from the different receiving devices 303 from different apparati for localization that are received via the input/output interfaces 309, 311. On the output interface 313 the apparatus for localization 300 can provide the results of analyzing the at least two signals of the at least two apparati for localization. The output interface 313 can be connected via a network 341 to a display device or a computer (not shown in Fig. 3), which is adapted to present the results of analyzing the received signals, for example to project the position of the target device onto a map.

The synchronization signal 304 for the triggering device 315, the synchronization signal 317 for the ADC 316 and/or the synchronization signal 306 for the PLL 340 can be different synchronization signals that may be derived from the same synchronization source. The synchronization signal 304 may comprise a 1 Hz signal, synchronization signal 306 may be a 897.5 MHz signal and the synchronization signal 317 may be a 40 MHz signal.

Instead of using a common synchronization network 308, the triggering device 315, the ADC 316 and the PLL 340 can be connected to separate synchronization networks (not shown in Fig. 3). The synchronization networks allow a synchronous operation of the components 315, 316, 340 of the same type (ADC, PLL, time window) independent from each other in the different localization apparati 102, 103, 104, 300. In another example the triggering device 315 may be connected to a manual trigger device (not shown in Fig. 3) via connection 342, which may be part of the data communication network 312. This manual trigger device may be adapted to trigger the signal reception in the receiving device 303 of all apparati of localization 102, 103, 104, 300 with reference to the synchronization signal 304. This manual trigger may be initiated by an operator.

The receiving device 303 uses a time window in order to allow receiving of at least two sub-signals 206 having a different frequency and thus may be responsible for accumulating different sub-signals 206. The time window adjusting device 314 can adjust the duration of the receiving time interval or of the receiving time window in the receiving device 303. By varying the duration of the receiving time interval the accuracy of the evaluated positions can be adjusted by varying the quantity of bursts having different frequencies that are received by the apparatus for localization 300. The time window adjusting device 314 can be connected to the data communication network 312 in order to distribute and/or to receive the size of the time window to/from other apparati of localization 102, 103, 104. Thus, a substantially equal window size for all apparati of localization may be set up. This distribution may also contribute to synchronous operation.

Fig. 4 shows a spectrogram of a plurality of bursts 206 sent by a target device during the duration of a time window 501 according to an exemplary embodiment of the present invention. The spectrogram 400 has a time axis 401 which ranges from 0 — 0.035 seconds and a frequency axis 402 which ranges from $-2 \times 10^7$ Hz to $2 \times 10^7$ Hz. The values of the frequency axis 402 correspond to the down-mixed signals of the uplink band 202 to the baseband or in other words, the frequency value 0 Hz substantially corresponds to the frequency of a local oscillator of a wideband frontend, e.g. the center frequency of the uplink band 202. Fig. 4 shows the frequency spectrum of $K=8$ bursts 206 or $K=8$ sub-signals 206 at N=8 different carrier frequencies $f_1$, $f_2$, $f_3$, $f_4$, $f_5$, $f_6$, $f_7$, $f_8$. Since the number of frequencies that are used for composing a wideband signal is arbitrary, the index N can be used to indicate the available number of frequencies. The index $K$ corresponds to the number of frames 205 that are used to form the complete receive signal during the time window 501. In order to cover each available frequency exactly one time, $K=N$ can be selected. In order to cover each frequency n times, $K=n*N$ can be selected, e.g. by defining the window size 501 for the receiving device. Each of the signals 206 comprises a predefined bandwidth 403 around a centre frequency $f_1$, $f_2$, $f_3$, $f_4$, $f_5$, $f_6$, $f_7$, $f_8$ or around a carrier frequency $f_1$, $f_2$, $f_3$, $f_4$, $f_5$, $f_6$, $f_7$, $f_8$. This bandwidth 403 may have a value of about 200 kHz. Even if the spectrum of each single burst extends beyond the bandwidth 403, the main portion of the energy of a single burst lays within the bandwidth indicated by the area 403. In Fig. 4, a majority, e.g. 90%, of the total energy of a burst 206 lies within the burst bandwidth 403. Fig. 4 shows a spectrum of a complete signal comprising 8 bursts, wherein each burst has substantially the same bandwidth 403. In another example, each single burst can have an individual bandwidth that substantially differs from the bandwidth of other bursts of the same signal. The variation of the carrier frequencies $f_1$, $f_2$, $f_3$, $f_4$, $f_5$, $f_6$, $f_7$, $f_8$ follows a predefined pattern, timing scheme, hopping scheme or frequency hopping scheme over the time 401. The bandwidth that is covered over the duration of $K=8$ frames 205 is an accumulation of the bandwidths of the individual signals 206 and thus forms a wideband signal. The frequencies of the hopping scheme in Fig. 4 are $f_1 = -2.5$ MHz, $f_2 = 2.5$ MHz, $f_3 = -1.5$ MHz, $f_4 = 1.5$ MHz, $f_5 = -500$ kHz, $f_6 = 3.5$ MHz, $f_7 = -3.5$ MHz, $f_8 = 500$ kHz with respect to the down-mixing frequency of the frontend. Thus an accumulated bandwidth of about 7 MHz is realized. The signal 400 of Fig. 4 bases on a pseudo-random frequency hopping scheme. Instead of a pseudo-random frequency hopping scheme a cyclic hopping scheme or a linear hopping scheme can be used wherein the frequencies are increased or decreased by a fixed frequency step until the last available frequency $f_8$ is reached and the scheme is repeated. The time window comprises the frame length 205 corresponding to each frequency $f_1$, $f_2$, $f_3$, $f_4$, $f_5$, $f_6$, $f_7$, $f_8$ and thus comprises in Fig. 4 8 times the length of frame 205.

As a result of the frequency hopping scheme the different bursts 206 sent in successively transmitted TDMA frames 205 are sent on different carrier frequencies $f_1$, $f_2$, $f_3$, $f_4$, $f_5$, $f_6$, $f_7$, $f_8$. While the bursts 206 are available, the target device is active. Between two bursts 206 a time gap of empty timeslots exists since the target device uses substantially one single timeslot 206 of the available timeslots of the TDMA frame 205. The spectrogram 400 of Fig. 4 shows a signal generated by a target device 101 which uses for example the first timeslot of a TDMA frame 205. The distance between neighbour carrier frequencies $f_1$, $f_2$, $f_3$, $f_4$, $f_5$, $f_6$, $f_7$, $f_8$, can be selected in accordance to a channel grid. The channel or grid spacing in GSM is 200 kHz. The minimum frequency distance $\Delta f$ between the burst signals can therefore be chosen as multiples of 200 kHz, e.g. 200 kHz, 400 kHz, 600 kHz, 800 kHz, 1 MHz, etc. In other words, if the used frequencies $f_1$, $f_2$, $f_3$, $f_4$, $f_5$, $f_6$, $f_7$, $f_8$ are rearranged in ascending order or descending order, as they may appear in a linear hopping scheme or after eliminating the time in Fig. 4, the minimum of all distances between the frequencies $f_1$, $f_2$, $f_3$, $f_4$, $f_5$, $f_6$, $f_7$, $f_8$ can be defined as $\Delta f$. An example of a minimum frequency distance is $\Delta f = 1$ MHz. The minimum frequency distance can also be considered if a hopping scheme for the target device is prepared. Since the bandwidth 403 of each burst may comprise 200 kHz, a frequency distance of 1 MHz may result in a high separation of individual channels. In Fig. 4, $f_1$ and $f_7$ have a frequency distance of $\Delta f = 1$ MHz. In an example all frequencies $f_1$, $f_2$, $f_3$, $f_4$, $f_5$, $f_6$, $f_7$, $f_8$ can have the same $\Delta f$, in another example $\Delta f$ can vary between different bursts. A linear hopping scheme, for example, has a constant $\Delta f$ between all successive neighbour bursts. Selecting the frequencies according to a constant $\Delta f$ may allow a simple calculation of the signal properties but is not a prerequisite for using the wideband correlation. Thus, a free choice of any frequency, of different $\Delta f$ and/or of any hopping scheme may be possible as long as at least two sub-signals having different frequencies are used.

A linear hopping scheme having a substantially constant $\Delta f$ may be used for the burst phase analyzing method.

A frequency hopping scheme, in particular a linear frequency hopping scheme can be generated by transmitting to the target device 101 the hopping scheme, in particular a list with the carrier frequency values $f_1$, $f_2$, $f_3$, $f_4$, $f_5$, $f_6$, $f_7$, $f_8$ that should be used with corresponding TDMA frames. A cyclic hopping can be used for generating a linearly increasing hopping scheme wherein the possible carrier frequencies are successively selected according to the list and the list is periodically repeated after all frequencies have been used at least one time.

In order to identify the timing scheme used by a target device, the target device can be triggered to initiate a transmission of a desired signal. For the purpose of initiating the target device 101 to transmit a desired signal, a traffic channel (TCH) may be set up. A TCH is a channel used for a standard communication between a target device and a base station. The bursts 206 are normal bursts and the list of possible frequencies $f_1$, $f_2$, $f_3$, ..., $f_N$ can comprise up to N=64 frequency channels. An alternative way of triggering the target device to initiate the transmission of a desired signal is to command a modified handover to the target device 101. The desired signal comprises at least two bursts 206. A modified handover may be an indication of a change of a target device between neighbour cells with no physical handover. After initiating a modified handover the target device starts sending a signal, which can be used to localize the target device. For the modified handover the apparatus for localization 300, for example the hopping-request device 321 or a base station connected to the hopping-request device 321 sends a hopping scheme or a list of neighbour base stations to the target device 101 and the handover process starts. Initiating a modified handover lets the target device 101 successively send access bursts 206 to the typically non-existing base stations. By using a modified handover, 64 access bursts 206 can be used for localizing the target device 101. The hopping request device can be an external device to the localization apparatus 300 and use a standard communication network interface to communicate with the localization apparatus 300. An external hopping request device 321 can use a separate antenna instead of sharing the antenna 301 of the localization apparatus. The external hopping request device 321 may be connected to the data communication network 312.

The spectrogram of Fig. 4 shows a single target device 101 that is active in a certain timeslot 206 at different channels $f_1$, $f_2$, $f_3$, $f_4$, $f_5$, $f_6$, $f_7$, $f_8$ or carrier frequencies $f_1$, $f_2$, $f_3$, $f_4$, $f_5$, $f_6$, $f_7$, $f_8$. If further target devices 101 are active at the same time, additional frequencies of the same timeslot or of other timeslots of the frame 205 may be occupied and also other frequency channels could be used. Since the allocation of the FDMA/TDMA channel scheme is known the receiving device 303 can differentiate different target devices 101 by detecting the used frequency scheme and timing scheme. The receiving device can identify the target device from which the at least two sub-signals 206 originate. Identifying an individual target device allows a separate localization of each of the individual target devices.

As shown in Fig. 1 and Fig. 2, the stations A, B, C, respectively the apparati 102, 103, 104 are synchronized via the synchronization network 308, in particular the receiving devices of the apparati for localizing are synchronized. In particular, the frequencies and phases of the local oscillators (Phase Locked Loop, PLL) 340 and ADCs 316 are synchronized via the synchronization network 308 with the further ADCs and PLLs of further apparati for localization. The triggering device 315 for starting receiving the signal is synchronized with the further triggering devices of further apparati for localization. Therefore, the localization apparatus 300, in particular the housing of the localization apparatus 300, has an input/output device or interface for connecting the synchronization device 305 to the synchronization network 308.

The receiving device 303 can comprise a storage device (not shown in Fig. 3) for storing the received signals. Such a storing device, e.g. a memory or a hard disk, may record the received signal over a plurality of frames 205. The triggering device 315 may be adapted to start recording to the storing device during the time window 501. The recording of the received signal may make analyzing of the signal over a plurality of frames 205 and pre-processing of the recorded signal possible. For recording the signal, the receiving device 303 may comprise an ADC 316, which receives via antenna 301 and either via a narrowband frontend 302 or via a wideband frontend 302 the signal 206 and which converts the received signal 206 into a digital format. The narrowband frontend 302 uses local oscillators 340 for adjusting the receiving frequency of the narrowband frontend 302. The receiving device 303 receives the signals 206 from the target device 101 and maintains the phase information, i.e. the phase angle of each burst 206 and/or the phase angle differences between consecutive bursts 206 are recorded and maintained for each individual target device 101. For this purpose the signal reception including down-mixing and data acquisition have to be performed substantially coherently, i.e. with maintaining and/or evaluating the phase information. The receiving device 303, in particular an ADC 316 of the receiving device, can provide the received signal in a digital format, for example as I/Q values, as digital ADC parameters or as digitized values. The ADC 316 receives the synchronization signal 317 in order to work synchronously with further ADCs of further apparati of localization. The sampling frequency of the ADC 316 depends on the bandwidth of the frontend 302. If the frontend 302 is implemented as a wideband frontend, the frontend covers a bandwidth broader or substantially equal to the accumulated bandwidth of the sub-signals 206 that fall into the time window. In an example this accumulated bandwidth comprises at least two times the bandwidth 403 of an individual burst 206. In another example, the wideband frontend has the bandwidth of the uplink band 202 and/or of the downlink band 201.

If the frontend 302 is implemented as narrowband frontend, the ADC 316 has to cover a bandwidth 403 of an individual burst 206. In GSM each burst has a bandwidth 403 of about 200 kHz. If the bandwidth 403 varies from burst to burst, the bandwidth of the frontend may have to be chosen to include the largest occurring signal bandwidth of an individual sub-signal. In an example the bandwidth may be adapted to the actual present sub-signal bandwidth. If at least two bursts 206 should be received, in the narrowband frontend case, the bandwidth of the receiving device 303, in particular of the narrowband frontend 302, covers about 200 kHz and may correspond to the bandwidth 403 of an individual burst. In the wideband case however, the receiving device 303 and in particular the wideband frontend 302 has to cover at least 400 kHz, i.e. at least two times the bandwidth of an individual burst. In a typical scenario the wideband frontend may cover the whole uplink bandwidth of the E-GSM 900 band of 35 MHz bandwidth. Using real sampling of the received signal, the sampling rate of the ADC 316 has to be at least double the bandwidth of the receiving device 303 and/or frontend 302 according to the Nyquist theorem. Also a complex sampling approach using two ADCs is possible and results in half the sampling rate necessary in real sampling. Real sampling samples the real received signal of the receiving device with a single ADC, whereas complex sampling samples I and Q components separately, e.g. with two ADCs. The sampling rate and sampling phase are derived from the synchronization device 305 via synchronization line 317 and thus the ADC 316 operates synchronously to further ADCs in further apparati for localization 102, 103, 104. Therefore, the ADC 316 also refers to a first reference determined by the synchronization signal received via the synchronizing device 305. Thus, the first reference determines a reference in a global time line that is valid for all apparati of localization 102, 103, 104 participating in localizing the position of the target device 101.

In an example the frontend 302 can be implemented as a plurality of parallel narrowband frontends, e.g. as a bank of parallel frontends. Each of the frontends comprises an expected narrowband bandwidth, e.g. the bandwidth of an individual burst 403, at the expected frequencies $f_1$, $f_2$, $f_3$, $f_4$, $f_5$, $f_6$, $f_7$, $f_8$. Thus, for example, eight parallel narrowband frontends form the frontend 302. Each of the frontends comprises a PLL at the corresponding frequency $f_1$, $f_2$, $f_3$, $f_4$, $f_5$, $f_6$, $f_7$, $f_8$ that is synchronised to corresponding PLLs of other apparati for localization and thus allows the detection of a corresponding burst 206. The received signals of at least two parallel narrowband frontends may be composed to a wideband signal for further processing. Also individual bursts can be isolated with such a frontend 302 at the predetermined timing.

The database 320 comprises a hopping scheme used by the target device 101. The database 320 can be connected to a base station via communication network 312 and derive the hopping scheme from the base station, which controls the communication of the base station with the target device. If no connection to a base station is available, the apparatus for localization may comprise the hopping request device 321 that is connected to the database 320 and is adapted to provide an actual hopping scheme derived from the database 320 to the target device 101. For example, the hopping request device 321 uses antenna 301 for providing a frequency hopping scheme to the target device. The hopping request device may also use a separate antenna for this purpose. In general, the hopping request device 321 is adapted for triggering a transmission of the at least two sub-signals 206 from the target device 101. The hopping request device 321 in an example only communicates with the target device, which has to be located and thus may help isolating the target device 101 to be localized from other devices. The hopping request device can use a base station for triggering a transmission of the target device.

The target device 101 may be directed to log on and/or to establish a connection to a specific base station and/or hopping request device 321 using a radio frequency jamming system (not shown in Fig. 3), which disconnects the target device from all further existing connections to further base stations and/or further hopping request devices or prevents the target device from establishing any connection to further base stations and/or further hopping request devices.

The frontend 302 can also be connected to the database 320 via connection 322. In particular in a configuration where the frontend 302 is realized as a narrowband frontend 302 the hopping scheme derived from database 320 can be used in the narrowband frontend 302 in order to adapt the local oscillators 340 or PLLs 340 for receiving the actual channel used by the target device 101 that is to be localized.

If the frontend 302 is realized as a wideband frontend, the receiving bandwidth of the wideband frontend comprises at least the accumulated bandwidths around the frequencies $f_1, f_2, f_3, f_4, f_5, f_6, f_7, f_8$, which can be used by a target device as transmission frequencies. In an example of at least two sub-signals sent by the target device 101, the bandwidth of the wideband frontend 302 comprises the accumulated bandwidth of the at least two sub-signals. In the example that an E-GSM 900 target device 101 has to be localized, the total bandwidth of the wideband frontend 302 covers a bandwidth of at least 35 MHz, i.e. the bandwidth of the uplink band 202. The receiving device 303 receives continuously the signals 206 sent by the target device 101. Continuous receiving in an example means that the time window 501 for receiving the signal from the target device 101 comprises at least the duration of two frames 205, such that at least two sub-signals 206 or bursts 206 of at least two frequencies $f_1, f_2, f_3, f_4, f_5, f_6, f_7, f_8$ can be recorded by the receiving device 303. In another example, the duration of the time window comprises the number of TDMA frames 205 which can be received at different frequencies $f_1, f_2, f_3, f_4, f_5, f_6, f_7, f_8$. Thus, the duration of the time window 501 can be calculated by multiplying the number of frequencies that should be received with the duration of a time frame 205. Continuously receiving the signal results also in receiving empty slots between the time slots 206 used by the target device. In other words, a complete TDMA frame 205 may be received even if substantially only one timeslot 206 of the TDMA frame 205 is used by the target device. The receiving device 303 digitizes and processes the complete received signal, including empty timeslots. In the case of a wideband frontend 302, the local oscillators 340 or PLLs 340 that are used for down-mixing the radio frequency signal can be operated at a substantially constant frequency. However, since the wideband frontend operates with a bandwidth, which covers at least the bandwidth of two or all possible frequencies according to the hopping scheme, the data rate of an ADC 316 or the sampling rate of an ADC 316 is high and the volume of data that is generated by the receiving device can result in a high processing load for the receiving device.

In the case that the frontend 302 is operated as a narrowband frontend 302, the input bandwidth of the receiving device 303 may substantially only comprise the bandwidth 403 of an individual burst 206 or sub-signal 206. Since the input bandwidth of the receiving device 303 is lower than a comparable input bandwidth of a receiving device 303 operated in combination with a wideband frontend, the data rate of the ADC 316 is substantially lower and the generated volume of data can also be reduced compared to the wideband frontend case. Thus, the processing power for processing the acquired data may be reduced.

In the narrowband frontend case, however, the local oscillators 340 or PLLs 340 of the narrowband frontend may have to be adjusted to the actual carrier frequencies $f_1, f_2, f_3, f_4, f_5, f_6, f_7, f_8$ used by a signal 206 sent by the target device 101 according to the timing of the hopping scheme. Therefore, the narrowband frontend 302 needs access to the hopping scheme 320. Since the hopping scheme 320 is either provided by the hopping request device 321 or by a corresponding base station A, B, C (not shown in Fig. 3), the narrowband frontend 302 either has a link to the base station A, B, C, or to the hopping request device 321 or to the database 320. Furthermore, adapting the local oscillators in the frontend 302 substantially has to be coordinated between all used apparati for localization 102, 103, 104 or stations A, B, C, such that the phase relations between the local oscillators are substantially maintained. In other words, the local oscillators on the narrowband frontend 302 are synchronized by a synchronization signal 306, 307, which may be present at all apparati for localization 300. The maintenance of phase relations results from the synchronization of the apparati for localization and ensures a coherent processing of the received sub-signals 206.

The synchronization network 308 may be realized by means of a wired connection, a plurality of receivers for global navigation satellite system (GNSS) timing signals or any other suitable technique for obtaining a common timing reference between the apparati for localization. The data exchange network 312 may be implemented as a wired or wireless data connection network such as a Local Area Network (LAN) or Wireless Local Area Network (WLAN) providing a unique identifier of the receiving devices.

If the frontend 302 is operated as a wideband frontend 302, the frontend 302 provides a wideband signal to the receiving device 303. In the case that the frontend 302 is operated as a narrowband frontend, a narrowband signal is provided to the receiving device 303. In an example, the receiving device 303 receives a wideband baseband signal from the wideband frontend 302 and in yet another example the receiving device 303 receives a narrowband baseband signal from the narrowband frontend 302. A switch may exist to switch the mode of operation of the frontend 302 between narrowband mode and wideband mode.

The time difference of arrival between different apparati of localization 300 can be evaluated in the evaluation device 310. The output device 330 of the receiving device 303 is one of the input devices 309 of the evaluation device 310. Another input device for the evaluation device 310 is the second input device 311. The second input device 311 is connected to a communication network 312 and thus the evaluation device 310, that is included into an apparatus of localization 300, can receive an output signal of an output interface of a further apparatus of localization (not shown in Fig. 3). The evaluation device 310 can also be realized as an external device. In an external case, the output device 330 of the receiving device is connected to a communication network 312. The evaluation device 310 has an output device 313 in order to provide the analyzing results, e.g. to a network 341, to a display or to a further processing and visualization apparatus, e.g. to provide a combined representation of the localization results and a geographical map.

If the receiving device 303 uses a wideband frontend 302 and thus provides a wideband signal on the output device 330, the evaluation device 310 can use a cross-correlation function (CCF) of the wideband signals (wideband CCF), in order to analyze the at least two signals that are received via different receiving devices. The number of input interfaces of the evaluation device 310 and the number of CCF that are executed by the evaluation device depend on the number of used apparati for localization. For a two-dimensional result, at least three apparati 300 are necessary and for a three-dimensional result, at least four apparati 300 are used. The evaluation device 310 receives via the input devices 309, 311 the wideband receiving signals from two receiving devices 303 of two apparati 104, 103. The calculation method is provided in equation (1), wherein the receiving signals on the corresponding outputs of the receiving devices 303 are named as $r_A$ and $r_B$, respectively in order to show whether the received signal was received by receiving device A or receiving device B, which may be located at the position of station A and station B, respectively.

$$CCF(\tau) = \int_{-\infty}^{\infty} r_A^*(t) \cdot r_B(\tau + t) dt \qquad (1)$$

The estimation of the actual time difference of arrival of the same signal originating from the same target device at two different apparati for localization 300 is based on a maximum search on the absolute value of the CCF (cross correlation function) over $\tau$ as given by equation (2). The value $\hat{\tau}$ is a value of $\tau$ for which the absolute value of the CCF has a maximum.

$$\hat{\tau} = \arg \max_{\tau} |CCF(\tau)| \qquad (2)$$

The evaluation device 310 uses the complete received signal including all variations of frequencies of the frequency hopping signal, including unused or empty timeslots or frequency areas or channels. In other words, a wideband signal recorded during the time window 501 comprising a plurality of different frequencies or channels $f_1$, $f_2$, $f_3$,..., $f_N$ originating from the same source is evaluated. In order to ensure that the signal originates from the same source a timeslot 206 allocated to a target device 101 may be used. Since a hopping scheme is used for defining the frequencies that are used in a sequence of timeslots the received signal comprises different frequencies $f_1$, $f_2$, $f_3$,..., $f_N$ in a predefined order. The different bursts 206 of an individual target device can be isolated and the signal of the individual target device can be monitored over a duration of a plurality of frames 205, at least over two frames 205 in order to receive at least two sub-signals 206 having a different frequency. The received signal includes the sub-signals 206 originating from the same target device 101 at different frequencies and further includes empty timeslots or timeslots that may be used by other signal sources. Another signal source can also allocate different frequencies in the same timeslot 206.

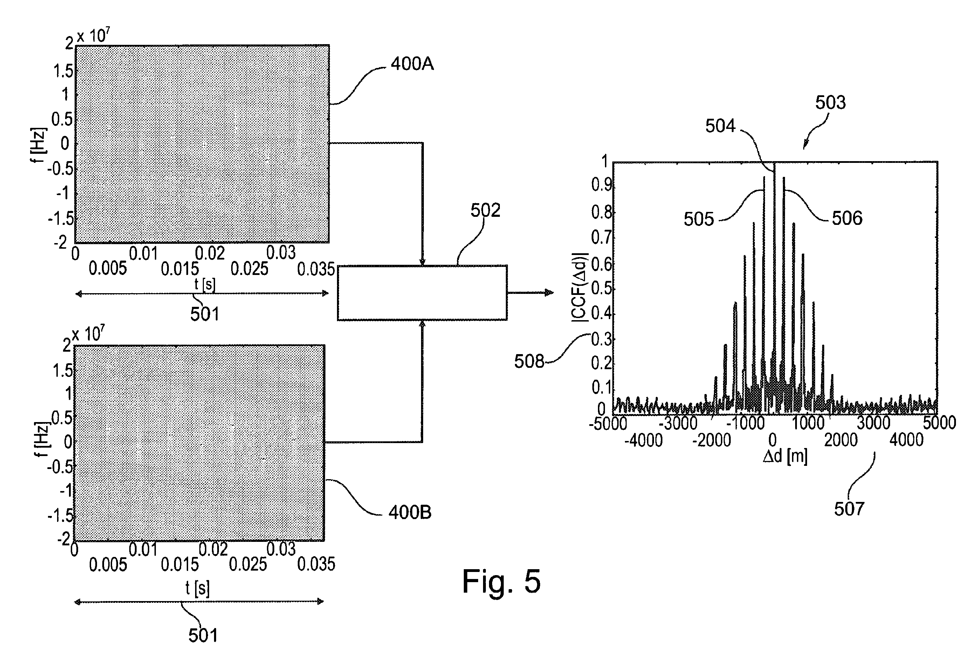

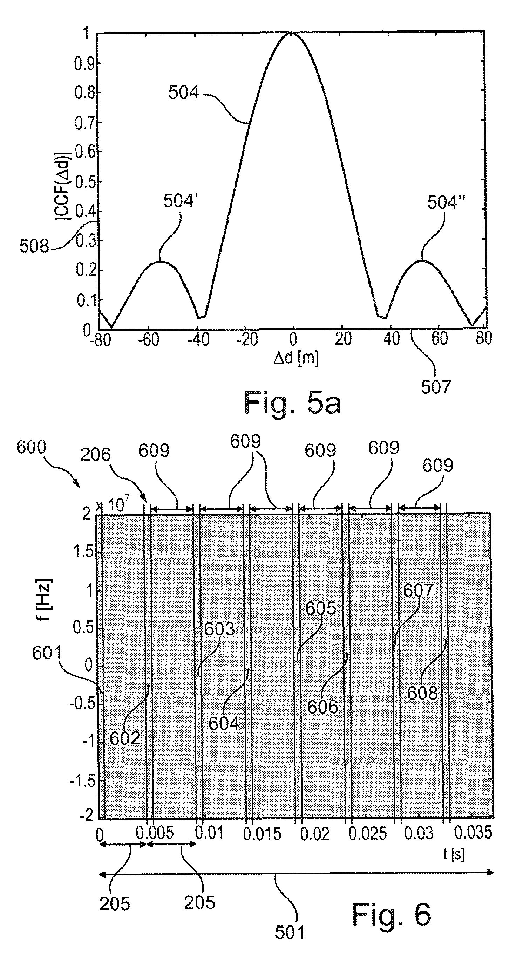

The complete received wideband signal 400A from an apparatus for localizing 300 and the wideband signal 400B of a further apparatus of localization are consolidated 502 in the single evaluation device 310 and the two signals are cross-correlated. In other words, the complete signals 400A, 400B received with a wideband frontend 302 and the receiving device 303 during the complete duration of the time window 501 are consolidated in the evaluation device 310. The signals are adapted such, that the signals provided by the receiving device 303 from the apparatus of localization 300, 104 and the signal received from a further receiving device of a further apparatus of localization 300, 103 are processed in such a way that it is ensured that the signals originate from the same target device. In other words, signals originating from other target devices are eliminated from the signals provided to the evaluation device 310. After carrying out the CCF in the evaluation device 310 with the complete receiving signal comprising all hopping frequencies $f_1$, $f_2$, $f_3$,..., $f_N$ received during the time window result in a diagram as shown in Fig. 5.

Fig. 5 shows the spectrogram of the wideband signal 400A received from an apparatus for localization 300, 104 and the spectrogram of a further wideband signal 400B received from a further apparatus for localization 300, 103. The received signals 400A, 400B are correlated in the correlation device 502 of an evaluation device 310 or of an evaluation apparatus 310. The resulting correlation function 503 comprises a plurality of narrow peaks 504, 505, 506, a main peak 504 and some side peaks 505, 506. Compared to a broad peak of a CCF of narrowband signals the main peak 504 of the CCF of this exemplary wideband signal or frequency hopping signal allows a more precise determination of a time difference of arrival between different apparati for localization and thus location of the target device 101. In Fig. 5 it is assumed that the time difference of arrival in both receiving devices 104, 103 is substantially zero, in other words the target device 101 has the same distance from receiving device 104 and receiving device 103. The diagram 503 comprises the distance axis 507 as distance difference values $\Delta d$ in meters and the axis 508 indicating the absolute value of the CCF, i.e. $|CCF(\Delta d)|$. The time difference of arrival in diagram 503 is converted into a distance difference $\Delta d$ and since the distance difference between the two receiving devices 104, 103 is assumed as to be zero, the main peak 504 arises in the area of a distance difference of zero. The scale of distance differences 507 ranges in this example from -5000 m to +5000 m.

Fig. 5a shows an enlarged view of distance differences in the range between -80 m and +80 m of Fig. 5 and shows the main peak 504 and side lobes 504' and 504" of the main peak 504. In Fig 5, the time window 501 for the wideband signals 400A, 400B comprises 8 bursts 206 and/or 8 time frames 205. Without limiting the use of any frequencies for localizing a target device, in order to simply the calculation in an example a predefined difference between the frequencies of the sub-signals can be assumed in an example. The minimum frequency distance between the sub-signals 206 $\Delta f$ can be assumed to be 1 MHz in this example. Since the width of the main peak 504 according to equation (3) comprises about 40 m, a localization of the target device within the same scale of precision is possible and thus, a precise time delay based localization of target devices 101 or of GSM mobile devices 101 is possible. The width of the cross-correlation function 503 around the main peak 504 depends on the total received bandwidth of the frequency hopping signal 400 $f_1, f_2, f_3,..., f_N$. If N is the number of burst signals within a time window 501 having different frequencies $f_1, f_2, f_3,..., f_N$ and a minimum carrier frequency distance of $\Delta f$ is used, then an estimation of the width of the main peak 504 is according to equation (3).

$$Peakwidth \approx \frac{c_0}{(N-1)\cdot\Delta f} \qquad (3)$$

The maximum error, offset or bias generated by a multipath propagation of the signal 206 is about half of the peak width according to equation (3). Thus, the maximum error can be approximated to equation (4).

$$Maximum - Error \approx \pm\frac{c_0}{2\cdot(N-1)\cdot\Delta f} \qquad (4)$$

In order to reduce the maximum error, the accumulated bandwidth $(N-1)\cdot\Delta f$ of the used bursts 206 at different frequencies $f_1, f_2, f_3,..., f_N$ may be selected as high as possible. The used accumulated bandwidth can be influenced by choosing a suitable frequency hopping scheme and adapting the length of the time window 501 accordingly. Thus, the hopping-request device 321 in conjunction with the device 314 for selecting the length of the time window can be used in order to adjust the accuracy of the evaluation results.

The distance of the first side peak 505, 506 to the main peak 504 is determined by the minimum frequency distance $\Delta f$ between the bursts. Further side maxima appear in the same distance. The distance between the first main peak 504 and the first side peak 505, 506 can be calculated according to equation (5).

$$First - Sidepeak - to - Mainpeak - Distance = \frac{c_0}{\Delta f} \qquad (5)$$

This distance can be used for separating signals received on the line of sight and undesired multipath propagation paths. In an example, if the multipath uses substantially the same additional way, by constructive or destructive superposition of the main maxima and side maxima, the main peak 504 may be reduced in size whereas the side peaks 505, 506 may be increased. Thus, the main peak 504 may not be detected accurately.

The selection of a value for the minimum frequency distances $\Delta f$ may influence the maximum possible size of the area within which the target device 101 can be localized. $\Delta f$ can be a constant value or may vary from burst to burst. In equations (3) and (4) $\Delta f$ is assumed as being constant.

In another example, instead of evaluating the position of the main peak 504, the positions of the side peaks 505, 506 and further side peaks may be evaluated in order to obtain an estimate for the actual time difference of arrival $\hat{\tau}$. Furthermore, the individual estimates gained by evaluating the plurality of peaks may be combined, e.g. averaged, in order to provide a more accurate time difference of arrival estimation.

In the following, some exemplary embodiments for GSM signal configurations are provided, which generate desirable results with the CCF. Generally, in order to generate a narrow main peak 504 and a high distance between the main peak 504 and the side peak 506 $\Delta f$ may be chosen as small as possible whereas the number of covered bursts $N$ may be selected as large as possible. For example, a time window 501 covering 64 bursts 206 or a time window of 64 TDMA frames 205 and a minimum frequency distance $\Delta f$ of 200 kHz can be selected. $\Delta f$ of 200 kHz and a signal bandwidth 403 of 200 kHz covers a bandwidth substantially without empty frequencies or only minor gaps between the bandwidths 403 of the bursts 206. The selection of these values (N=64; $\Delta f$=200 kHz) generates a high distance between the main peak 504 and the first side peak 505, 506. In an example this distance may be $\pm$ 1.5 km. In other words, a target device 101 can be localized with a high reliability within an area of approximately this size by the receiving devices of the apparati for localization 102, 103, 104. The number of frequencies $N$=64 is the maximum number of frequencies that is provided by suitable transmission requesting techniques in the GSM standard. The totally covered bandwidth with such a selection is 12.6 MHz. Thus, a receiving device 303 comprises at least a receiving bandwidth of 12.6 MHz.

Another selection of the values $\Delta f$ and N can be $N$=64 frequencies and $\Delta f$=400 kHz. Such a selection of a frequency hopping scheme allows to detect a target device 101 in an area of about $\pm$ 750 m. The number of bursts is the maximum number of bursts having different carrier frequencies as provided by suitable transmission requesting techniques in the GSM standard. The covered bandwidth in such a configuration is 25.2 MHz.

Another selection of values of $N$=58 frequencies and $\Delta f$=600 kHz result in a distance between the main peak 504 and the first side peaks 505, 506 of $\pm$ 500 m. The number of used frequencies $N$=5 is lower than the number of possible frequencies $N$=64 and thus, the time window in order to cover the minimum 58 bursts can be selected smaller than in other cases in which at minimum 64 bursts are evaluated. Thus, the detection time can be decreased. The total covered bandwidth is the maximum possible bandwidth to be covered with the E-GSM 900 standard and reaches about 34.2 MHz. A high covered bandwidth may increase the accuracy of detecting the position of the main peak 504 and thus the position of the target device 101.

The minimum carrier frequency distance $\Delta f$ between individual bursts 206 is a constant value in the above-mentioned examples and the time window 501 is selected such, that each burst of a different frequency $f_1$, $f_2$, $f_3$,..., $f_N$ is detected only once during that time window 501. In other words, the time window 501 is selected such, that the time window does not exceed the duration of repetition of a hopping scheme.

The order of sending the individual bursts may be irrelevant and thus can be selected as a pseudo-random sequence or a linear sequence. If a hopping scheme is provided to the target device, the hopping scheme is selected such that the target device sends each burst of a different carrier frequency only once during the time window 501. Combinations having varying carrier frequency distances $\Delta f$ instead of a constant $\Delta f$ between the bursts can be used. Furthermore, the time window 501 may also exceed the duration of repetition of a hopping scheme resulting in multiple usage of a given frequency channel. The duration of repetition may also be denoted the period of the hopping scheme. The period of the hopping scheme corresponds to the number of frequencies N times the duration of a frame 205. In another example the length of the time window 501 corresponds to a plurality of durations of a period of the hopping scheme. Such a selection may have the effect that some frequencies appear more than once during the duration of the time window. In yet another example the length of the time window 501 corresponds to at least one complete period of the hopping scheme and additionally fractional periods of the hopping scheme period. It should be ensured that during the time window 501 the bursts are transmitted such, that the desired complete bandwidth is covered by accumulating the sequence of bursts.

Wideband signals may generate a high volume of data in the receiving device 303 that has to be transmitted to the evaluation device 310. Using a compression or pre-processing method can reduce the volume of available data. A pre-processing of the recorded data in the receiving device 303 thus can be used to reduce the necessary processing power, to increase the signal to noise ratio (SNR), to eliminate interference signals, to compensate hardware imperfections, and to separate users if a plurality of signal sources 101 are used. The user separation can be used in order to identify the target device and thus to ensure that the received signal substantially only originates from the target device to be localized.

A wideband signal received at a receiving device 303 in combination with a wideband frontend device 302 can generate a high data volume, if up to or more than 64 TDMA frames of a GSM signal are analyzed using a complex sampling rate of around 40 MS/s (MegaSamples/s). A complex value which may be sampled with a complex sampling rate may be provided as I and Q value. If the ADCs 316 use a resolution of 10 bit the result of a received signal may generate around 30 Megabyte of data per each recording. In other words, during each time window 501 a data volume of 30 Megabyte may be generated, which has to be transmitted to the evaluation device 310 and which has to be used as the source of a correlation function 502. The employment of a wideband frontend 302 may also have the effect, that noise may be recorded from frequency bands which are not used by an actual burst. This fact decreases the signal-to-noise ratio from the receiving signals.

If in addition to the target device to be localized other signal sources are active, which use a frequency hopping scheme, a definite identification of the target device may be necessary in order to allocate the individual bursts to the target devices. This identification of a plurality of individual target devices or in particular of received signals to the individual target devices allows a simultaneous localization of different target devices 101.

In order to reduce the data volume, a pre-processing method comprises a temporal isolation method and/or a spectral isolation method of individual bursts. The pre-processing in general may generate a collection of sub-signals or partial signals 206 in a form that can be analyzed with a reduced computing power.

Fig. 6 shows a spectrogram 600 in time and frequency of a wideband receiving signal which comprises 8 bursts 601, 602, 603, 604, 605, 606, 607, 608 in the timeslots 206 at different points in time. The frequency hopping scheme that is used in a target device 101 in order to generate the wideband receiving signal 600 follows a linear hopping scheme along the time in this example. Each of the bursts 206 comprises a bandwidth along the frequency axis.

The time window 501 in Fig. 6 is selected such that the at least 8 bursts are covered during the duration of the time window. Since in the GSM standard the duration of a TDMA frame 205 is about 4.615 ms, the time window 501 ranges from 0 to 8 *4.615 ms, i.e. 0 to 36.92 ms. Since in Fig. 6 only one single source is active and only a single timeslot is used empty timeslots 609 appear in the spectrogram, between the individual timeslots.

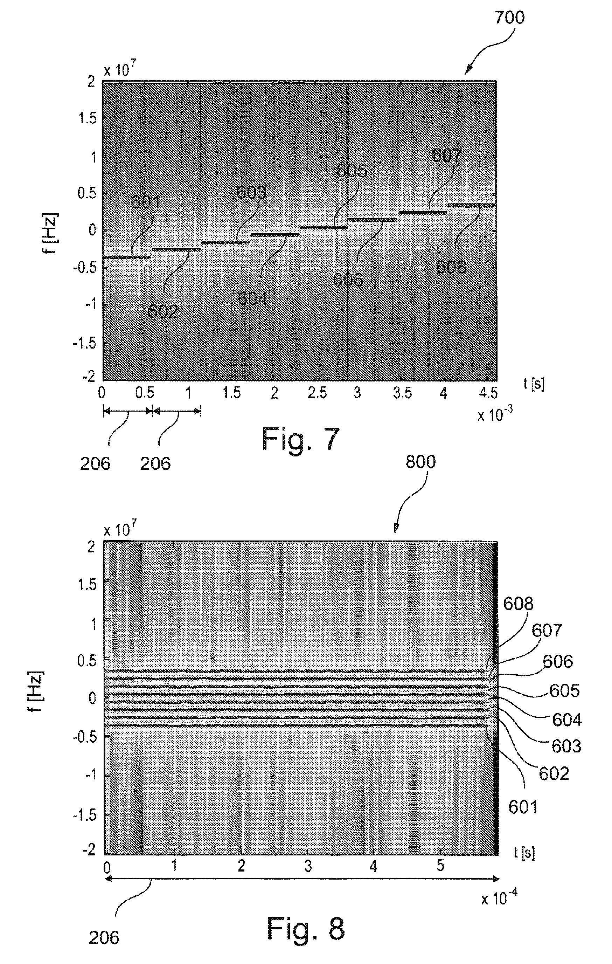

Fig. 7 shows a spectrogram 700 in time and frequency after using a pre-processing method of temporal and spectral isolation. For carrying out the temporal isolation, the empty timeslots 609 between individual bursts of a single source are eliminated. For carrying out a spectral isolation, the used frequency blocks 403 of the individual bursts 601, 602, 603, 604, 605, 606, 607, 608 are processed by using a bandpass filter around the used frequency block 403. The bandwidth of a bandpass filter corresponds substantially to at least the bandwidth 403 of a single burst. The isolated individual bursts may be concatenated resulting in spectrogram 700. Since a linear hopping scheme is used the spectrogram 700 has the form of a step function in this example. The duration of the time window is therefore reduced by a factor depending on the time slots, in the example of Fig. 7 by a factor of 8. Fig. 7 therefore shows the spectrogram 700 of a concatenated auxiliary signal wherein empty timeslots 609 have been eliminated. The time distance between the bursts 206 can also be reduced by a value larger than the empty timeslots, resulting in an auxiliary signal having partially overlapping isolated burst signals over the time.

Fig. 8 shows the spectrogram 800 in time and frequency after using a pre-processing method of temporal and spectral isolation and stacking the individual bursts 601, 602, 603, 604, 605, 606, 607, 608. The stacking may be performed by summation of all individual isolated burst signals. By this way, each individual burst is projected into the same time interval 206 of one single burst. In other words, a substantially fully overlapping auxiliary signal 800 may be generated.

The spectrogram 600 of the complete signal is shown in Fig. 6. By pre-processing the bursts 601, 602, 603, 604, 605, 606, 607, 608, auxiliary signals, e.g. 700 or 800, for the complete signal can be generated. These auxiliary signals can be used for the cross-correlation 502 in the evaluation device 310 instead of the complete signal. The resulting signal is reduced in time and thus the processing power for the CCF may also be reduced. By pre-processing the signal with at least one of the pre-processing methods, an SNR can be increased. The steps that are executed for composing the auxiliary signals 700, 800 may also allow to identify the signal source 101, which sent out the received signals 400, 600. A further pre-processing method may interpolate the auxiliary signals 700, 800 before executing the CCF, in order to increase the resolution of the CCF result.

Each receiving device 303 of each localization apparatus 102, 103, 104 uses substantially identical processing methods for the received signal 206. In particular, the isolation and filter parameters and the number of sampling values for the ADC 316 should be identically selected in the receiving devices 303 of different apparati for localizing whose results are combined with an evaluation device 310. The communication network 312 could be used in order to exchange the currently present parameters for each of the receiving devices 303 in different apparati for localization 102, 103, 104.

In the case of a narrowband frontend 302, the temporal isolation and spectral isolation is automatically conducted since the narrowband frontend 302 receives individual bursts of an individual signal according to the hopping scheme of database 320. Thus, the receiving device 303 in combination with a narrowband frontend 302 receives a plurality of narrowband burst signals for processing. In order to use the CCF, the narrowband burst signals can be suitably assembled in order to reconstruct a wideband signal 600 or a wideband auxiliary signal 700 or 800. This may be realized, for example, by using an up-sampling or interpolation method and a multiplication with complex exponential functions. Similar to the use of a wideband frontend in the case of using a narrowband frontend a substantially identical processing of the received signal is possible and the parameters used in individual localization apparati may be exchanged using the communication network 312.

In order to determine the time difference of arrival of a signal at different localizing apparati 102, 103, 104 as an alternative to the wideband correlation function an examination of the phase of the received signals can be conducted. A phase analyzing method uses a change of a phase angle between a plurality of bursts received at different frequencies $f_1$, $f_2$, $f_3$,..., $f_N$ in different receiving devices of the apparati 102, 103, 104. In order to receive bursts at different carrier frequencies a frequency hopping method or a frequency hopping scheme may be used. In the following, an example of the $i^{th}$ burst 206 or $i^{th}$ sub-signal 206 sent in the $i^{th}$ TDMA frame 205 of a GSM signal is described. In a complex notation the burst 206, sub-signal 206 or the signal of the $i^{th}$ TDMA frame can be stated as in equation (6).

$$s_i(t) \cdot e^{j(2\pi f_i t + \varphi_i)} \qquad (6)$$

$S_i$ is used for a complex baseband signal and $f_i$ is used for the carrier frequency and $\varphi_i$ is used for the initial phase angle. If a signal 206 from a target device 101 is received at a station A and a station B, in particular at corresponding localization apparati 103, 104, having different time delays $\tau_A$ and $\tau_B$ the receiving signal in station A is according to equation (7) and receiving signal in station B is according to equation (8).

$$r_{A,i} = s_i(t - \tau_A) \cdot e^{j(2\pi f_i(t - \tau_A) + \varphi_i)} = s_i(t - \tau_A) \cdot e^{j(2\pi f_i t + \varphi_i)} \cdot e^{-j2\pi f_i \tau_A} \qquad (7)$$

$$r_{B,i} = s_i(t - \tau_B) \cdot e^{j(2\pi f_i(t - \tau_B) + \varphi_i)} = s_i(t - \tau_B) \cdot e^{j(2\pi f_i t + \varphi_i)} \cdot e^{-j2\pi f_i \tau_B} \qquad (8)$$

The complex quotient for burst i can be written as shown in equation (9).

$$q_i = \frac{r_{B,i}}{r_{A,i}} = \frac{s_i(t - \tau_B)}{s_i(t - \tau_A)} \cdot e^{-j2\pi f_i(\tau_B - \tau_A)} = const. \cdot e^{-j2\pi f_i(\tau_B - \tau_A)} \qquad (9)$$

The constant value *const* is substantially identical for all bursts i since the baseband signals are only phase-modulated and the time difference $\tau_B$-$\tau_A$ is constant.
If a sequence of different bursts having a substantially identical carrier frequency distance $\Delta f$ is used, than the different frequencies can be calculated according to equation (10).

$$f_{i+1} = f_i + \Delta f \qquad (10)$$

The quotient of successive bursts can be converted to equation (11) using equations (9) and (10) and can be reduced to equation (12). Thus the time difference can be calculated according to equation (13) by forming the sum of the argument of the further second burst $r_{B,i+1}$ and the argument of the first burst $r_{A,i}$ and subtracting the argument of the second first burst $r_{A,i+1}$ and subtracting the argument of the further first burst $r_{B,i}$. The result is divided by the negative minimum angular frequency difference value $-2\pi\Delta f$.

$$\frac{q_{i+1}}{q_i} = e^{-j2\pi\Delta f(\tau_B - \tau_A)} \qquad (11)$$

$$-2\pi\Delta f(\tau_B - \tau_A) = \arg(\frac{q_{i+1}}{q_i}) = \arg(\frac{r_{B,i+1} \cdot r_{A,i}}{r_{A,i+1} \cdot r_{B,i}}) = \arg(r_{B,i+1}) - \arg(r_{A,i+1}) + \arg(r_{A,i}) - \arg(r_{B,i})$$

(12)

$$\tau_B - \tau_A = \frac{\arg(r_{B,i+1}) - \arg(r_{A,i+1}) + \arg(r_{A,i}) - \arg(r_{B,i})}{-2\pi\Delta f}$$

(13)

The difference time of arrival $\tau_B$-$\tau_A$ of the receiving signals between the two apparati 103, 104 thus can be reduced to measuring the phases of the receiving signals at different carrier frequencies $f_i$ and $f_{i+1}$. In other words, at least two sub-signals 206 or bursts 206 that correspond to each other received in different localization apparati 103, 104 can be used for determining the time difference of arrival or the propagation time difference of the signal sent by the target device 101. Since a phase measurement or measuring a phase can substantially only unambiguously be determined within a range of modulo $2\pi$ the phase evaluation method can be used in an unambiguous range of $\pm 1/(2\Delta f)$ or in a spatial unambiguous range of $\pm c_0/(2\Delta f)$ wherein $c_0$ is the propagation velocity in the propagation medium.

Therefore, for calculating the time difference at least two bursts 206, (burst i, burst i+1) on different carrier frequencies are sufficient to determine the time difference of arrival. If a plurality of burst signals is available, the results of each mutual determination of the time difference value can be used in order to provide an average value of time difference values.  The distance or gap between carrier frequencies $\Delta f$ may be kept below a value such that the area where an unambiguous determination of the location is possible may not be exceeded.

For calculating the phase values or phase difference values at least two options for processing are available. In one example, all receiving signals are collected and the phase determination is carried out on the evaluation device 310 or the external evaluation device 310. The complex quotient values $q_i$ can be calculated directly and the calculation results can be used in the equations (11) — (13). The received signals may be used in their complete length for calculating the phase values or phase difference values. The complete length of a received signal used for the phase value calculation corresponds to the length of a burst 206. The complete received signals may have to be transferred to the evaluation device. The precision of the localization may be increased be repeating the calculation of $\tau_B - \tau_A$ for a plurality of each two bursts and determining an average value for the time difference value.

In an alternative calculation method, a pre-calculation of the phase values can be executed in the receiving devices 303 of the apparati 102, 103, 104. The phase value is determined by calculating the complex argument values arg(.) in equation (12) and (13). These phase values can be calculated locally on each individual apparatus 102, 103, 104. The phase values can for example be calculated by calculating a CCF with a known part or portion of the burst signal 206. For example, the training sequence 210 can be used as a known part from the burst signal 206 and can be used as a reference signal. The phase value of the maximum of the correlation peak may be used as corresponding complex argument value. After carrying out this local calculation, only individual phase values have to be transferred to the evaluation device 310 and thus the data volume that has to be exchanged between the individual stations 102, 103, 104 can be reduced significantly.

The phase evaluation method or the burst phase analyzing method can be used in the receiving device 303 in combination with a narrowband frontend 302 and the pre-processing may be executed in the receiving device 303.

A pre-processing may also be possible in combination with a wideband frontend 302, if the narrowband signals or individual bursts 206 are isolated from the complete wideband receiving signal 400, 600. If the pre-processing methods of Fig. 7 and Fig. 8 are used, this information about individual signals is automatically available. The pre-processing of the phase value by a correlation method using a reference or training signal may also be performed on the evaluation device 310 instead or in combination with pre-processing of the values in the receiving device. In this case, the received signals have to be transferred to the evaluation device beforehand.

If the quotient of equation (11) is interpreted as a recursion rule the term of equation (11) can be used for forming a series according to equation (14) with the term $q_0 = e^{j\phi_0}$ .

$$q_n = e^{-j2\pi\Delta f \cdot n \cdot (\tau_B - \tau_A)} \cdot e^{j\phi_0} \qquad (14)$$

If the argument of this series (14) is calculated, a linear increase of the phase between successive bursts can be recognized. The phase increment is shown in equation (15).

$$-2\pi\Delta f \cdot (\tau_B - \tau_A) \qquad (15)$$

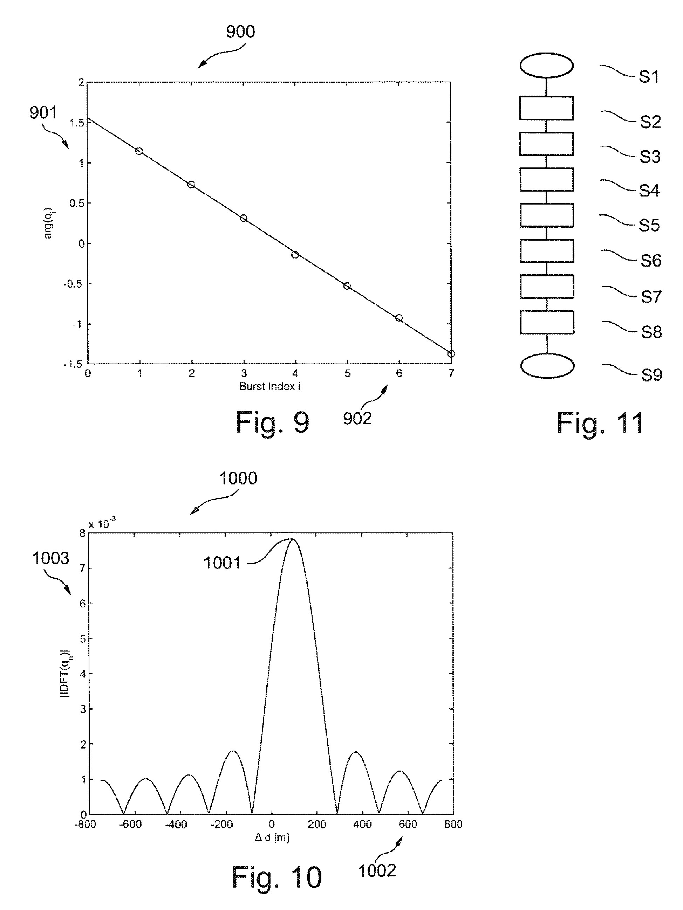

For calculating the time difference of arrival, a least square fit approximation or least square fit method can be used. Fig. 9 shows a diagram of phase values for a plurality of bursts. The phase values are indicated on the ordinate 901 and the number of bursts is indicated in the abscissa 902 of diagram 900. The least square line can approximate the different phase values and the slope of the least square line in diagram 900 corresponds to the phase increment which can be used for determining the time difference of arrival.

In another example, the series of $\{q_n\}$ according to equation (14) can be transformed using a Discrete Fourier Transform (DFT). The series of equation (14) corresponds to a sampled exponential signal having a constant frequency. The determination of the maximum of the absolute value of the Fourier transform allows to determine the time difference of arrival $\tau_B$-$\tau_A$. An interpolation, i.e. a finer resolution, of the transform can be reached by pre-processing the signal with a zero padding method. The DFT can be replaced by a Fast Fourier Transform (FFT) in order to decrease the calculation time. Fig. 10 shows the absolute value of the DFT spectrum 1000 after using a DFT with the series $\{q_n\}$ of equation (14). The location of the maximum 1001 is an indication of the time difference of arrival at the distance axis 1002. The application of the corresponding inverse transforms (IFFT, IDFT) may be considered as equivalent to the non-inverse transforms (FFT, DFT).

For applying the least square approximation method and the Discrete Fourier Transform or Fast Fourier Transform signals having equidistant frequency distances $\Delta f$ between two neighbouring bursts are used. For example, a linear frequency ramp or a linear frequency hopping scheme, as for example shown in Fig. 6, can generate signals having an equidistant frequency distance. Using the burst phase analyzing method can increase the bandwidth of the signal in a similar amount as when the CCF is used. In the case of a burst phase analyzing method, the bandwidth is indirectly defined by the length of the series $\{q_n\}$ and by increased resolution of using the DFT. Increasing the length of the series results in smaller peaks 1001 of the absolute value of the DFT. Small peaks allow a more accurate calculation of the distance difference on the distance axis 1002. The increased length of a series can be achieved by using a plurality of bursts or more than at least two bursts. The use of a plurality of bursts increases the covered bandwidth.

In yet another example, the series of equation (14) is analyzed using a model based and/or parametric estimation method such as multiple signal classification (MUSIC) or estimation of signal parameters via rotational invariance techniques (ESPRIT). These methods may be considered as alternatives to the Fourier based approaches.

A phase analyzing method may only be unambiguous within a range of modulo $2\pi$. In order to ensure the unambiguous application of the methods, a certain geometrical arrangement of apparati for localization 102, 103, 104 may be used. The apparati 102, 103, 104 can be arranged close to the area within which the target device 101 should be localized. Using a carrier frequency distance $\Delta f$ of 200 kHz results in an unambiguous range of $\pm 750$ m. Thus, the apparati 102, 103, 104 may be arranged such, that the unambiguous range of $\pm 750$ m may not be exceeded.

An ambiguous measuring of the phase can be prevented by using a CCF method beforehand in order to determine the number of complete $2\pi$ periods. This information can  be used when the burst phase analyzing method is conducted. Alternatively, the use of other principles of localization, e.g. evaluation of the timing advance TA value, may provide the number of complete $2\pi$ periods.

For the burst phase analyzing method, the same GSM signal configurations as described in the wideband correlation method may be employed. These signal configurations include the cases with $N$=64 frequencies and $\Delta f$=200 kHz, $N$=64 frequencies and $\Delta f$=400 kHz and N=58 frequencies and $\Delta f$=600 kHz. For using these values, a hopping scheme with a constant carrier frequency difference $\Delta f$ constituting a linear frequency ramp with increasing or decreasing carrier frequencies is used.

The present invention may allow generating and exploiting a localization signal with an increased bandwidth. The evaluation methods are coherent since the phase information between a plurality of bursts is maintained and exploited. Substantially only with maintaining and processing of the phase information the signal received during the duration of the window 501 can be considered as a wideband signal. The bandwidth of 35 MHz, for example used in the E-GSM 900 standard can be used completely. This fact allows to realize a localization accuracy of about 5 m. The influence of noise or interference can be reduced if the determination of a position is repeated and different methods are combined, e.g. wideband correlation and burst phase analyzing.

The applied signal configuration, characterized by the number of bursts and corresponding frequencies, may be chosen according to the desired performance of the time difference of arrival measurement. The signal configuration may be altered in successive measurement cycles in order to provide diversity and/or to improve the overall system performance. A plurality of measurement cycles may allow a combination of the received signals in each of the different apparati for localization and thus provide an improvement in measurement accuracy. The signal configuration may also be adapted taking previous measurement results into account.

Using the apparatus for localization triggers a target device 101 to send a signal according to a hopping scheme, helps to identify the individual target device and calculates a time difference of arrival for localizing the target device 101, such as a GSM mobile phone. The precision of the localization can be high by using suitable parameters. The apparati 102, 103, 104 can be used by network operators or network equipment suppliers in combination with their base stations A, B, C. The present invention can be used with every radio standard that uses a frequency hopping method, such as GSM, TETRA, DECT, IEEE 802.15.4 (e.g. ZigBee™) or IEEE 802.15.1 (Bluetooth™). Other radio standards can be enhanced by implementing a frequency hopping scheme.

Fig. 11 shows a method for localizing a target device. The method starts in an idle state S1 and comprises receiving in step S2 a synchronization signal, e.g. in a synchronization device 305 in order to synchronize the apparatus for localization to an external device such as a further apparatus for localization. In step S3 a duration of a receiving time interval is determined from a timing scheme, such as a TDMA frame structure 205 or a hopping scheme, in order to ensure that a received signal comprises at least two sub-signals 206 or bursts 206 having different frequencies $f_1$, $f_2$, $f_3$,..., $f_N$ in order to form a wideband signal. In another example a plurality of bursts having different frequencies is determined. In step S4 a target device is identified from which the at least two sub-signals 206 originate in order to ensure that the received signals have been sent by the same target device. In step S5 a trigger signal is provided, e.g. to a receiving device, with regard to a first reference, which is determined by the synchronization signal. The receiving device starts upon detecting the trigger signal receiving the signal from the target device until a receiving time interval or a time window has expired. In step S6 the received signal is provided, e.g. on an output interface of the receiving device to an evaluation device. In step S7 the evaluation device gathers the received signals of different apparati for localization and determines the corresponding time differences of arrival between the plurality of apparati for localization. The evaluation method used by the evaluation device may comprise a wideband correlation or burst phase analyzing method. In step S8 the obtained values for the time differences of arrival are processed in order to yield a location estimate of the target device 101. And in step S9 the method returns to the idle state.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

**Claims**

1. Apparatus for localizing (102, 103, 104, 300) a target device (101), said apparatus comprising:

   a receiving device (303) with an output device (330);
   a triggering device (315) for receiving a synchronization signal and for providing a trigger signal to the receiving device (303);
   an evaluation device (310);
   wherein the triggering device (315) is adapted to provide a trigger signal with regard to a first reference determined by the synchronization signal;
   wherein the receiving device (303) is adapted to start receiving a signal from the target device (101) upon receiving the trigger signal from the triggering device (315) and to stop receiving the signal from the target device after expiration of a receiving time interval (501);
   wherein the receiving device (303) is adapted for determining the duration of the receiving time interval (501) from a timing scheme of the target device (101) such that the received signal (400, 600) comprises at least two sub-signals (206) having different frequencies ($f_1$, $f_2$) and being available at different points of time; and
   wherein the received signal comprises the accumulated bandwidth of the at least two sub-signals and concatenating the at least two sub-signals generates a wideband signal the bandwidth of which is broader than each individual sub-band bandwidth of each sub-signal; and
   wherein the receiving device is adapted to identify the target device (101) from which the at least two sub-signals (206) originate in order to ensure that the at least two sub-signals originate from the target device (101);
   wherein the receiving device (303) is adapted to provide the signal (400, 400A)received during the time interval (501) having the accumulated bandwidth on the output device (330)
wherein the evaluation device (310) comprises:

a first input device (309) to be connected to the output device (330) of the receiving device (303);
a second input device (311) for receiving a further received signal (400B) from the same target device (101) provided by a further apparatus for localization (102, 103, 104);

wherein the evaluation device (310) is adapted to analyze a time difference between the received signal (400, 400A) and the further received signal (400B).

2. The apparatus (300) of claim 1, further comprising:

a hopping-request device (321) adapted for identifying the timing scheme of the target device by at least one method selected from the group of methods consisting of:

providing a predetermined hopping scheme; providing a linear hopping scheme;
providing a pseudo random hopping scheme; providing a cyclic hopping scheme;
detecting a communication channel; deriving a hopping scheme from a database (320);
identifying the target device (101); establishing a communication channel; and initiating a modified handover.

3. The apparatus (300) of claim 1 or 2, wherein the receiving device further comprises:

a frequency adjusting device (340);
wherein a bandwidth of the receiving device (303) corresponds to a bandwidth of at least one of the at least two sub-signals (206);
wherein the frequency adjusting device (340) is adapted to adjust a receive frequency of the receiving device (302, 303) in accordance with the frequency corresponding to each of the at least two sub-signals (206) at a corresponding timing;
wherein the receiving frequency and the corresponding timing of each of the at least two sub-signals is derived from the timing scheme.

4. The apparatus (300) of one of claims 1 to 3, wherein identifying the target device (101) comprises at least one identification method selected from the group of identification methods consisting of:

identifying an identification of the target device;
initiating a modified handover;
providing a hopping scheme to the target device (101); and
eliminating a signal of a device different from the target device (101).

5. The apparatus (300) of one of claims 1 to 4, wherein the receiving device (303) is adapted to pre-process the received signal (400, 400A, 600) by using at least one pre-processing method selected from the group of pre-processing methods consisting of:

a Fourier transform method; a Fourier analysis method; forming a cross correlation with a training sequence;
a temporal isolation method; and a spectral isolation method.

6. The apparatus (300) of one of claims 1 to 5, wherein at least one of the receiving device (303), the triggering device (315), the evaluation device (310), the frequency adjusting device and the hopping-request device is an external device.

7. The apparatus (300) of one of claims 1 to 6, wherein the evaluation device (310) is adapted to analyze the time difference between the received signal (400, 400A) and the further received signal (400B) by using at least one analyzing method selected from the group of analyzing methods consisting of:

a wideband correlation method; and
a burst phase analyzing method.

8. The apparatus (300) of claim 7, wherein for executing the wideband correlation method the evaluation device (310) is adapted for executing a correlation method with the received signal (400, 400A) and the further received signal (400B) over the duration of the receiving time interval (501);

wherein the received signal (400A) and the further received signal (400B) each comprise at least a bandwidth determined by an accumulation of the bandwidths of the at least two sub-signals (206).

**9.** The apparatus (300) of claim 7, wherein for executing the burst phase analyzing method the receiving device (303) is adapted for providing the at least two sub-signals (206) as a first burst and a second burst; and

wherein the evaluation device is adapted for receiving the first burst ($r_{A,i}$) and the second burst ($r_{A,i+1}$); and

wherein the evaluation device (310) is further adapted for receiving a further first burst ($r_{B,i}$) and a further second burst ($r_{B,i+1}$) from the further apparatus for localization (102, 103, 104);

wherein the first burst corresponds to the further first burst and the second burst corresponds to the further second burst; and

wherein the evaluation device is further adapted to analyze the time difference by dividing the quotient ($q_{i+1}$) of the further second burst ($r_{B,i+1}$) and the second burst ($r_{A,i+1}$) by the quotient ($q_i$) of the further first burst ($r_{B,i}$) and the first burst ($r_{A,i}$).

**10.** The apparatus (300) of claim 9, wherein analyzing the time difference comprises at least one method selected from the group of methods consisting of:

a method of determining a least squares approximation; a least squares fit method; a model based evaluation method; a multi signal classification method; an estimation of signal parameters via rotational invariance techniques method; a method of forming a Fourier transform; calculating of a complex argument; and a method of forming a discrete Fourier transform.

**11.** The apparatus (300) of one of claims 1 to 10, wherein the receiving device (303), the triggering device (315), the hopping-request device (321), the database (320) and/or the evaluation device (310) are included in one single housing.

**12.** System (100) for localizing a target device (101) comprising at least two apparati for localization (102, 103, 104) of one of claims 1 to 11;

wherein the system (100) is adapted to localize the target device by using a time difference of arrival method and/or a multilateration method.

**13.** Method for localizing a target device (101), the method comprising:

receiving a synchronization signal;

determining a duration of a receiving time interval from a timing scheme of the target device (101) such that the received signal comprises at least two sub-signals (206) having different frequencies ($f_1$, $f_2$) and being available at different points of time; and

providing a trigger signal with regard to a first reference determined by the synchronization signal;

starting receiving the signal from the target device (101) upon receiving the trigger signal and stopping receiving the signal from the target device after expiration of the receiving time interval;

wherein the received signal comprises the accumulated bandwidth of the at least two sub-signals and concatenating the at least two sub-signals generates a wideband signal the bandwidth of which is broader than each individual sub-band bandwidth of each sub-signal;

identifying the target device (101) from which the at least two sub-signals are originating in order to ensure that the at least two sub-signals originate from the target device (101);

providing the signal received during the time interval (501) having the accumulated bandwidth to a first input device (311) of an evaluation device (310);

receiving a further received signal (400B) from the same target device (101) on a second input device of the evaluation device

analyzing a time difference between the received signal (400, 400A) and the further received signal (400B) in the evaluation device (310).

**Patentansprüche**

**1.** Vorrichtung zum Lokalisieren (102, 103, 104, 300) einer Zielobjekteinrichtung (101), wobei die Vorrichtung aufweist:

eine Empfangseinrichtung (303) mit einer Ausgangseinrichtung (330);

eine Triggereinrichtung (315) zum Empfangen eines Synchronisationssignals und zum Bereitstellen eines Triggersignals an die Empfangseinrichtung (303);

eine Auswerteeinrichtung (310);

wobei die Triggereinrichtung (315) eingerichtet ist, ein Triggersignal bezogen auf eine erste Referenz bereitzustellen, welche von dem Synchronisationssignal bestimmt wird;

wobei die Empfangseinrichtung (303) eingerichtet ist, das Empfangen eines Signals von der Zielobjekteinrichtung (101) auf das Empfangen des Triggersignals von der Triggereinrichtung (315) zu beginnen und das Empfangen des Signals von der Zielobjekteinrichtung nach dem Ablauf eines Empfangszeitintervalls (501) zu stoppen;

wobei die Empfangseinrichtung (303) eingerichtet ist, die Dauer des Empfangszeitintervalls (501) aus einem Timingplan der Zielobjekteinrichtung (101) zu bestimmen, so dass das empfangene Signal (400, 600) zumindest zwei Subsignale (206) aufweist, welche unterschiedliche Frequenzen ($f_1$, $f_2$) aufweisen und welche zu unterschiedlichen Zeitpunkten verfügbar sind; und

wobei das empfangene Signal die akkumulierte Bandbreite der zumindest zwei Subsignale aufweist und ein Aneinanderfügen der zumindest zwei Subsignale ein Breitbandsignal generiert, dessen Bandbreite breiter ist, als jede einzelne Subbandbandbreite eines jeden Subsignals; und

wobei die Empfangseinrichtung eingerichtet ist, die Zielobjekteinrichtung (101) zu identifizieren, von der die zumindest zwei Subsignale (206) stammen, um sicherzustellen, dass die zumindest zwei Subsignale von der Zielobjekteinrichtung (101) stammen;

wobei die Empfangseinrichtung (303) eingerichtet ist, das Signal (400, 400A) mit der akkumulierten Bandbreite, welches während des Zeitintervalls (501) empfangen worden ist, an der Ausgangseinrichtung (330) bereitzustellen

wobei die Auswerteeinrichtung (310) aufweist:

eine erste Eingangseinrichtung (309), welche mit der Ausgangseinrichtung (330) der Empfangseinrichtung (303) verbindbar ist;

eine zweite Eingangseinrichtung (311) zum Empfangen eines weiteren empfangenen Signals (400B) von derselben Zielobjekteinrichtung (101), welches von einer weiteren Vorrichtung zum Lokalisieren (102, 103, 104) bereitgestellt wird;

wobei die Auswerteeinrichtung (310) eingerichtet ist, einen Zeitunterschied zwischen dem empfangenen Signal (400, 400A) und dem weiteren empfangenen Signal (400B) zu analysieren.

2. Die Vorrichtung (300) nach Anspruch 1, weiter aufweisend:

eine Hoppinganforderungseinrichtung (321), die zum Identifizieren des Timingplans der Zielobjekteinrichtung mit zumindest einem Verfahren eingerichtet ist, welches aus der Gruppe von Verfahren ausgewählt wird, welche besteht aus:

dem Bereitstellen eines vorherbestimmten Hoppingplans; dem Bereitstellen eines linearen Hoppingplans; dem Bereitstellen eines Pseudozufallshoppingplans; dem Bereitstellen eines zyklischen Hoppingplans; dem Erkennen eines Kommunikationskanals; dem Ableiten eines Hoppingplans aus einer Datenbank (320); dem Identifizieren der Zielobjekteinrichtung (101); dem Herstellen eines Kommunikationskanals; und dem Beginnen eines modifizierten Handovers.

3. Die Vorrichtung (300) nach Anspruch 1 oder 2, wobei die Empfangseinrichtung weiter aufweist:

eine Frequenzanpasseinrichtung (340);

wobei eine Bandbreite der Empfangseinrichtung (303) der Bandbreite von zumindest einem der zumindest zwei Subsignale (206) entspricht;

wobei die Frequenzanpasseinrichtung (340) eingerichtet ist, eine Empfangsfrequenz der Empfangseinrichtung (302, 303) entsprechend der Frequenz anzupassen, welche jeder der zumindest zwei Subsignale (206) zu einem entsprechenden Timing entspricht;

wobei die Empfangsfrequenz und das entsprechende Timing eines jeden der zumindest zwei Subsignale von dem Timingplan abgeleitet wird.

4. Die Vorrichtung (300) nach einem der Ansprüche 1 bis 3, wobei das Identifizieren der Zielobjekteinrichtung (101) zumindest ein Identifikationsverfahren aufweist, welches aus der Gruppe von Identifikationsverfahren ausgewählt ist, welche besteht aus:

dem Identifizieren eines Kennzeichens der Zielobjekteinrichtung ;
dem Beginnen eines modifizierten Handovers;
dem Bereitstellen eines Hoppingplans an die Zielobjekteinrichtung (101); und
dem Entfernen eines Signals von einer Einrichtung, die sich von der Zielobjekteinrichtung (101) unterscheidet.

5. Die Vorrichtung (300) nach einem der Ansprüche 1 bis 4, wobei die Empfangseinrichtung (303) eingerichtet ist, das empfangene Signal (400, 400A, 600) durch zumindest ein Vorverarbeitungsverfahren vorzuverarbeiten, welches aus der Gruppe von Vorverarbeitungsverfahren ausgewählt ist, welche besteht aus:

einem Fourier-Transformationsverfahren; einem Fourier-Analyseverfahren; dem Bilden einer Kreuzkorrelation mit einer Trainingssequenz; einem zeitlichen Isolationsverfahren; und einem spektralen Isolationsverfahren.

6. Die Vorrichtung (300) nach einem der Ansprüche 1 bis 5, wobei zumindest eine von der Empfangseinrichtung (303), der Triggereinrichtung (315), der  Auswerteeinrichtung (310), der Frequenzanpasseinrichtung und der Hoppinganfordereinrichtung eine externe Einrichtung ist.

7. Die Vorrichtung (300) nach einem der Ansprüche 1 bis 6, wobei die Auswerteeinrichtung (310) eingerichtet ist, die Zeitdifferenz zwischen dem empfangenen Signal (400, 400A) und dem weiteren empfangenen Signal (400B) durch das Nutzen von zumindest einem Analyseverfahren zu analysieren, welches aus der Gruppe von Analyseverfahren ausgewählt ist, welche besteht aus:

einem Breitbandkorrelationsverfahren; und
einem Burstphaseanalyseverfahren.

8. Die Vorrichtung (300) nach Anspruch 7, wobei die Auswerteeinrichtung (310), zum Ausführen des Breitbandkorrelationsverfahrens, eingerichtet ist, ein Korrelationsverfahren mit dem empfangenen Signal (400, 400A) und dem weiteren empfangenen Signal (400B) über die Dauer des Empfangszeitintervalls (501) auszuführen;
wobei das empfangene Signal (400A) und das weitere empfangene Signal (400B) jeweils zumindest eine Bandbreite aufweisen, welche durch ein Akkumulieren der Bandbreiten der zumindest zwei Subsignale (206) bestimmt wird.

9. Die Vorrichtung (300) nach Anspruch 7, wobei zum Ausführen des Burstphaseanalyseverfahrens die Empfangseinrichtung (303) eingerichtet ist, die zumindest zwei Subsignale (206) als einen ersten Burst und einen zweiten Burst bereitzustellen; und
wobei die Auswerteeinrichtung eingerichtet ist, den ersten Burst ($r_{A,i}$) und den zweiten Burst ($r_{A,i+1}$) zu empfangen; und
wobei die Auswerteeinrichtung (310) weiter eingerichtet ist, einen weiteren ersten Burst ($r_{B,i}$) und einen weiteren zweiten Burst ($r_{B,i+1}$) von der weiteren Einrichtung zum Lokalisieren (102, 103, 104) zu empfangen;
wobei der erste Burst mit dem weiteren ersten Burst in Beziehung steht und der zweite Burst mit dem weiteren zweiten Burst in Beziehung steht; und
wobei die Auswerteeinrichtung weiter eingerichtet ist, durch das Dividieren des Quotienten ($q_{i+1}$) des weiteren zweiten Bursts ($r_{B,i+1}$) und des zweiten Bursts ($r_{A,i+1}$) durch den Quotienten ($q_i$) des weiteren ersten Bursts ($r_{B,i}$) und des ersten Bursts ($r_{A,i}$) den Zeitunterschied zu analysieren.

10. Die Vorrichtung (300) nach Anspruch 9, wobei das Analysieren des Zeitunterschieds zumindest ein Verfahren aufweist, welches aus der Gruppe von Verfahren gewählt ist, welche besteht aus:

einem Verfahren zum Bestimmen einer Least Squares Approximation; einem Least Squares Fit-Verfahren, einem modellbasierten Auswerteverfahren; einem Multi-Signal-Classification Verfahren; einem Verfahren zum Schätzen von Signalparametern über Rotational Invariance Techniken; einem Verfahren zum Bilden einer Fourier-Transformierten; dem Berechnen eines komplexen Arguments; und einem Verfahren zum Bilden einer diskreten Fourier-Transformierten.

11. Die Vorrichtung (300) nach einem der Ansprüche 1 bis 10, wobei die Empfangseinrichtung (303), die Triggereinrichtung (315), die Hoppinganfordereinrichtung (321), die Datenbank (320) und/oder die Auswerteeinrichtung (310) in einem einzigen Gehäuse enthalten sind.

**12.** Ein System (100) zum Lokalisieren einer Zielobjekteinrichtung (101), welche zumindest zwei Vorrichtungen zum Lokalisieren (102, 103, 104) nach einem der Ansprüche 1 bis 11 aufweist; wobei das System (100) eingerichtet ist, die Zielobjekteinrichtung mit einem Time Difference of Arrival-Verfahren und/oder mit einem Multilaterationsverfahren zu lokalisieren.

**13.** Ein Verfahren zum Lokalisieren einer Zielobjekteinrichtung (101), wobei das Verfahren aufweist:

Empfangen eines Synchronisationssignals;

Bestimmen einer Dauer eines Empfangszeitintervalls aus einem Timingplan der Zielobjekteinrichtung (101), so dass das empfangene Signal zumindest zwei Subsignale (206) aufweist, welche unterschiedliche Frequenzen ($f_1$, $f_2$) haben und welche zu unterschiedlichen Zeitpunkten verfügbar sind; und

Bereitstellen eines Triggersignals bezogen auf eine erste Referenz, welche von dem Synchronisationssignal bestimmt wird;

Beginnen mit dem Empfangen des Signals von der Zielobjekteinrichtung (101) auf das Empfangen des Triggersignals und Stoppen des Empfangens des Signals von der Zielobjekteinrichtung nach dem Ablauf des Empfangszeitintervalls;

wobei das empfangene Signal die akkumulierte Bandbreite der zumindest zwei Subsignale aufweist und ein Aneinanderfügen der zumindest zwei Subsignale ein Breitbandsignal generiert, dessen Bandbreite breiter ist als jede einzelne Subbandbandbreite eines jeden Subsignals;

Identifizieren der Zielobjekteinrichtung (101), von der die zumindest zwei Subsignale stammen, um sicherzustellen, dass die zumindest zwei Subsignale von der Zielobj ekteinrichtung (101) stammen;

Bereitstellen des Signals mit der akkumulierten Bandbreite, welches während des Zeitintervalls (501) empfangen worden ist, an eine erste Eingangseinrichtung (311) einer Auswerteeinrichtung (310);

Empfangen eines weiteren empfangenen Signals (400B) von derselben Zielobjekteinrichtung (101) an einer zweiten Eingangseinrichtung der Auswerteeinrichtung;

Analysieren eines Zeitunterschieds zwischen dem empfangenen Signal (400, 400A) und dem weiteren empfangenen Signal (400B) in der Auswerteeinrichtung (310).

**Revendications**

**1.** Appareil pour localiser (102, 103, 104, 300) un dispositif cible (101), ledit appareil comprenant :

un dispositif de réception (303) avec un dispositif de sortie (330),

un dispositif de déclenchement (315) pour recevoir un signal de synchronisation et

pour délivrer un signal de déclenchement au dispositif de réception (303),

un dispositif d'évaluation (310),

dans lequel le dispositif de déclenchement (315) est adapté pour délivrer un signal de déclenchement eu égard à une première référence déterminée par le signal de synchronisation,

dans lequel le dispositif de réception (303) est adapté pour lancer la réception d'un signal en provenance du dispositif cible (101) à la réception du signal de déclenchement en provenance du dispositif de déclenchement (315) et pour arrêter la réception du signal en provenance du dispositif cible après l'expiration d'un intervalle de temps de réception (501),

dans lequel le dispositif de réception (303) est adapté pour déterminer la durée de l'intervalle de temps de réception (501) à partir d'un schéma de cadencement du dispositif cible (101) de sorte que le signal reçu (400, 600) comprend au moins deux sous-signaux (206) ayant différentes fréquences ($f_1$, $f_2$) et étant disponibles à différents instants, et

dans lequel le signal reçu comprend la bande passante accumulée des au moins deux sous-signaux et la concaténation des au moins deux sous-signaux génère un signal à large bande dont la bande passante est plus large que chaque bande passante de sous-bande individuelle de chaque sous-signal, et

dans lequel le dispositif de réception est adapté pour identifier le dispositif cible (101) duquel les au moins deux sous-signaux (206) proviennent afin de s'assurer que les au moins deux sous-signaux proviennent du dispositif cible (101),

dans lequel le dispositif de réception (303) est adapté pour délivrer le signal (400, 400A) reçu pendant l'intervalle de temps (501) ayant la bande passante accumulée sur le dispositif de sortie (330)

dans lequel le dispositif d'évaluation (310) comprend :

un premier dispositif d'entrée (309) à relier au dispositif de sortie (330) du dispositif de réception (303),

un second dispositif d'entrée (311) pour recevoir un signal reçu supplémentaire (400B) en provenance du même dispositif cible (101) délivré par un appareil supplémentaire pour la localisation (102, 103 , 104), dans lequel le dispositif d'évaluation (310) est adapté pour analyser une différence temporelle entre le signal reçu (400,400A) et le signal supplémentaire reçu (400B).

2. Appareil (300) selon la revendication 1, comprenant en outre :

un dispositif de demande de saut (321) adapté pour identifier le schéma de cadencement du dispositif cible par l'intermédiaire d'au moins un procédé sélectionné parmi le groupe de procédés consistant à :

fournir un schéma de saut prédéterminé, fournir un schéma de saut linéaire, fournir un schéma de saut pseudo aléatoire, fournir un schéma de saut cyclique, détecter un canal de communication, dériver un schéma de saut d'une base de données (320), identifier le dispositif cible (101), établir un canal de communication, et initier un transfert modifié.

3. Appareil (300) selon la revendication 1 ou 2, dans lequel le dispositif de réception comprend en outre :

un dispositif de réglage de fréquence (340), dans lequel une bande passante du dispositif de réception (303) correspond à une bande passante d'au moins l'un des au moins deux sous-signaux (206), dans lequel le dispositif de réglage de fréquence (340) est adapté pour régler une fréquence de réception du dispositif de réception (302, 303) conformément à la fréquence correspondant à chacun des au moins deux sous-signaux (206) à un cadencement correspondant, dans lequel la fréquence de réception et le cadencement correspondant de chacun des au moins deux sous-signaux est dérivée du schéma de cadencement.

4. Appareil (300) selon l'une des revendications 1 à 3, dans lequel l'identification du dispositif cible (101) comporte au moins un procédé d'identification sélectionné parmi le groupe de procédés d'identification consistant à :

identifier une identification de dispositif cible, initier un transfert modifié, fournir un schéma de saut au dispositif cible (101), et éliminer un signal d'un dispositif différent du dispositif cible (101).

5. Appareil (300) selon l'une des revendications 1 à 4, dans lequel le dispositif de réception (303) est adapté pour effectuer un prétraitement du signal reçu (400, 400A, 600) en utilisant au moins un procédé de prétraitement sélectionné parmi le groupe de procédés de prétraitement constitué de :

un procédé de transformée de Fourier, un procédé d'analyse de Fourier, la formation d'une corrélation croisée avec une séquence de formation, un procédé d'isolation temporelle, et un procédé d'isolation spectrale.

6. Appareil (300) selon l'une des revendications 1 à 5, dans lequel au moins l'un du dispositif de réception (303), du dispositif de déclenchement (315), du dispositif d'évaluation (310), du dispositif de réglage de fréquence et du dispositif de demande de saut est un dispositif externe.

7. Appareil (300) selon l'une des revendications 1 à 6, dans lequel le dispositif d'évaluation (310) est adapté pour analyser la différence temporelle entre le signal reçu (400, 400A) et le signal supplémentaire reçu (400B) en utilisant au moins un procédé d'analyse sélectionné parmi le groupe de procédés d'analyse constitué de:

un procédé de corrélation à large bande, et un procédé d'analyse de phase en rafale.

8. Appareil (300) selon la revendication 7 dans lequel, pour exécuter le procédé de corrélation à large bande, le dispositif d'évaluation (310) est adapté pour exécuter un procédé de corrélation avec le signal reçu (400, 400A) et le signal reçu supplémentaire (400B) sur la durée de l'intervalle de temps de réception (501), dans lequel le signal reçu (400A) et le signal reçu supplémentaire (400B) comportent tous les deux au moins une bande passante déterminée par une accumulation des bandes passantes des au moins deux sous-signaux (206).

**9.** Appareil (300) selon la revendication 7 dans lequel, pour exécuter le procédé d'analyse de phase en rafale, le dispositif de réception (303) est adapté pour fournir les au moins deux sous- signaux (206) sous forme d'une première rafale et d'une seconde rafale, et

dans lequel le dispositif d'évaluation est adapté pour recevoir la première rafale ($r_{A,i}$) et la seconde rafale ($r_{A,i+1}$), et dans lequel le dispositif d'évaluation (310) est en outre adapté pour recevoir une première rafale supplémentaire ($r_{B,i}$) et une seconde rafale supplémentaire ($r_{B,i+1}$) en provenance de l'appareil supplémentaire pour la localisation (102, 103, 104), dans lequel la première rafale correspond à la première rafale supplémentaire et la seconde rafale correspond la seconde rafale supplémentaire, et

dans lequel le dispositif d'évaluation est en outre adapté pour analyser la différence temporelle en divisant le quotient ($q_{i+1}$) de la seconde rafale supplémentaire ($r_{B,i+1}$) et de la seconde rafale ($r_{A,i+1}$) par le quotient ($q_i$) de la première rafale supplémentaire ($r_{B,i}$) et de la première rafale ($r_{A,i}$) .

**10.** Appareil (300) selon la revendication 9, dans lequel l'analyse de la différence temporelle comprend au moins un procédé sélectionné parmi le groupe de procédés constitué de :

un procédé de détermination d'une approximation par les moindres carrés, un procédé d'ajustement par les moindres carrés, un procédé d'évaluation basé sur un modèle, un procédé de classification multi-signaux, une estimation de paramètres de signal via un procédé de techniques d'invariance rotationnelle, un procédé de formation d'une transformée de Fourier, le calcul d'un argument complexe, et un procédé de formation d'une transformée de Fourier discrète.

**11.** Appareil (300) selon l'une des revendications 1 à 10, dans lequel le dispositif de réception (303), le dispositif de déclenchement (304), le dispositif de demande de saut (321), la base de données (320) et/ou le dispositif d'évaluation (310) sont inclus dans un boîtier unique.

**12.** Système (100) pour localiser un dispositif cible (101) comportant au moins deux appareils pour la localisation (102, 103, 104) selon l'une des revendications 1 à 11, dans lequel le système (100) est adapté pour localiser le dispositif cible en utilisant une différence temporelle de procédé d'arrivée et/ou un procédé de multilatération.

**13.** Procédé pour localiser un dispositif cible (101), le procédé comprenant :

de recevoir un signal de synchronisation,

de déterminer une durée d'un intervalle de temps de réception à partir d'un schéma de cadencement du dispositif cible (101) de sorte que le signal reçu comprend au moins deux sous-signaux (206) ayant des fréquences différentes ($f_1$, $f_2$) et étant disponibles à différents instants, et

de délivrer un signal de déclenchement eu égard à une première référence déterminée par le signal de synchronisation,

de lancer la réception du signal en provenance du dispositif cible (101) à la réception du signal de déclenchement et d'arrêter la réception du signal en provenance du dispositif cible après l'expiration de l'intervalle de temps de réception,

dans lequel le signal reçu comprend la bande passante accumulée des au moins deux sous-signaux et la concaténation des au moins deux sous-signaux génère un signal à large bande dont la bande passante est plus large que chaque bande passante de sous bande individuelle de chaque sous-signal, et

d'identifier le dispositif cible (101) duquel les au moins deux sous-signaux proviennent afin de s'assurer que les au moins deux sous-signaux proviennent du dispositif cible (101),

de délivrer le signal reçu pendant l'intervalle de temps (501) ayant la bande passante accumulée à un premier dispositif d'entrée (311) d'un dispositif d'évaluation (310),

de recevoir un signal reçu supplémentaire (400B) en provenance du même dispositif cible (101) sur un second dispositif d'entrée du dispositif d'évaluation,

d'analyser une différence temporelle entre le signal reçu (400, 400A) et le signal reçu supplémentaire (400B) dans le dispositif d'évaluation (310).

## Fig. 1

## Fig. 2

Fig. 3

Fig. 4

Fig. 5

Fig. 5a

Fig. 6

Fig. 7

Fig. 8

Fig. 9

Fig. 11

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102007043649 A1
- WO 2008008685 A2
- GB 2383708 A
- US 20100279707 A1
- US 6433740 B1

### Non-patent literature cited in the description

- **MARKUS PICHLER et al.** Multi-channel distance measurement with IEEE 802.15.4 (ZigBee) devices. *IEEE Journal of Selected Topics in Signal Processing,* October 2009, vol. 3 (5
- **STEPHAN SCHWARZER et al.** Precise distance measurement with IEEE 802.15.4 (ZigBee) devices. *IEEE Radio and Wireless Symposium,* January 2008
- **M. PICHLER et al.** Positioning with moving IEEE 802.15.4 (ZigBee) transponders. *IEEE MTT-S International Microwave Workshop on Wireless Sensing, Local Positioning and RFID,* September 2009
- Digital cellular telecommunications system (Phase 2+); Location Services (LCS); Functional description; Stage 2. *3GPP TS 03.71,* 1999
- *ETSI TS 101 724,* June 2004
- IEEE Standard for Information technology-Telecommunications and information exchange between systems-Local and metropolitan area networks-Specific requirements; Part 15.1: Wireless medium access control (MAC) and physical layer (PHY) specifications for wireless personal area networks (WPAN s. *IEEE 802.15.1,* 14 June 2005
- IEEE Standard for Information technology-Telecommunications and information exchange between systems-Local and metropolitan area networks-Specific requirements. *IEEE 802.15.4a,* 28 August 2007